(19) **Europäisches Patentamt European Patent Office Office européen des brevets**

(11) **EP 4 445 102 B1**

(12) **EUROPEAN PATENT SPECIFICATION**

(45) Date of publication and mention of the grant of the patent:
**01.04.2026 Bulletin 2026/14**

(51) International Patent Classification (IPC):
**G01F 1/84** *(2006.01)* **G01F 25/10** *(2022.01)*

(21) Application number: **21835086.6**

(52) Cooperative Patent Classification (CPC):
**G01F 1/8436; G01F 25/10**

(22) Date of filing: **06.12.2021**

(86) International application number:
**PCT/US2021/062068**

(87) International publication number:
**WO 2023/107093 (15.06.2023 Gazette 2023/24)**

(54) **USING PARAMETERS OF SENSOR SIGNALS PROVIDED BY A SENSOR ASSEMBLY TO VERIFY THE SENSOR ASSEMBLY**

VERWENDUNG VON PARAMETERN VON SENSORSIGNALEN, DIE VON EINER SENSORANORDNUNG BEREITGESTELLT WERDEN, UM DIE SENSORANORDNUNG ZU VERIFIZIEREN

UTILISATION DE PARAMÈTRES DE SIGNAUX DE CAPTEUR FOURNIS PAR UN ENSEMBLE CAPTEUR POUR LA VÉRIFICATION DE L'ENSEMBLE CAPTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.10.2024 Bulletin 2024/42**

(60) Divisional application:
**24216913.4 / 4 517 279**

(73) Proprietor: **Micro Motion, Inc.**
**Boulder, CO 80301 (US)**

(72) Inventors:
• **RECKSIEDLER, Adam**
**Loveland, Colorado 80537 (US)**
• **DOWNING, Bert J.**
**Longmont, Colorado 80504 (US)**

(74) Representative: **Ellis, Christopher Paul**
**Ollila Law Limited**
**Edwards Centre**
**The Horsefair**
**Hinckley LE10 0AN (GB)**

(56) References cited:
**WO-A1-2015/112296       WO-A1-2019/045703**
**WO-A1-2020/036586**

**Description**

TECHNICAL FIELD

The embodiments described below relate to verifying sensor assemblies in a vibratory meter and, more particularly, to using sensor signals provided by the sensor assembly to verify the sensor assembly.

BACKGROUND

Vibratory meters, such as for example, Coriolis mass flowmeters, liquid density meters, gas density meters, liquid viscosity meters, gas/liquid specific gravity meters, gas/liquid relative density meters, and gas molecular weight meters, are generally known and are used for measuring fluid parameters. Generally, vibratory meters comprise a sensor assembly and a meter electronics. A sensor assembly may be communicatively coupled to the meter electronics and provide sensor signals to the meter electronics. The sensor assembly may include conduits configured to vibrate in response to a driving force imposed by an actuator that receives a drive signal from the meter electronics. The actuator may be referred to as a driver.

When the conduits are used in the sensor assembly, the conduits may be filled with material having properties to be measured. The material within the conduit or conduits of the sensor assembly may be flowing or stationary. The sensor assembly may be used to measure the one or more fluid parameters such as mass flow rate, density, or other properties of a material in the sensor assembly. More specifically, there may be one or more transducers affixed to the conduit or conduits configured to convert vibratory motion into sensor signals. These transducers may be referred to as pick-off sensors. The pick-off sensors are typically located at inlet and outlet portions of the conduit or conduits.

As noted above, the vibratory meter may be a Coriolis flow meter. The Coriolis flow meter includes one or more conduits that are connected inline in a pipeline or other transport system and convey material, e.g., fluids, slurries, and/or the like, in the system. Each conduit may be viewed as having a set of natural vibration modes including, for example, simple bending, torsional, radial, and coupled modes. In a Coriolis flow measurement application, a conduit is excited in one or more vibration modes as material flows through the conduit, and motion of the conduit is measured at points spaced along the conduit. During flow, the vibrating tube and the flowing mass couple together due to Coriolis forces, causing a phase difference in the vibration between the ends of the tube. The phase difference may be directly proportional to the mass flow and may be measured as a phase difference between two sensor signals provided by the pick-off sensors.

For example, the mass flow rate of the material may be proportional to a phase difference or the time delay between the two sensor signals, where the time delay may comprise a phase difference divided by frequency. The mass flow rate can therefore be determined by, for example, multiplying the time delay by a proportionality constant or calibration factor, which may be referred to as a Flow Calibration Factor (FCF). The FCF may reflect the material properties and mechanical properties of the flow tube. The FCF may be determined by a calibration process prior to installation of the flow meter into a pipeline or other conduit. In the calibration process, a material is flowed through the conduit at a known flow rate and a proportionality constant between the phase difference or time delay and the flow rate is calculated and recorded as the FCF.

One advantage of a Coriolis flow meter is that the accuracy of the measured mass flow rate is not affected by wear of moving components in the flow meter. More specifically, the only moving parts are vibrating conduits and any sensors or transducers affixed to the vibrating conduit. Nevertheless, it is a problem that the conduits may change with time. More specifically, change in the conduits can cause a change in the mechanical properties of the conduit. For example, a change in the conduit may cause the conduit's stiffness to change from an initial representative stiffness value (or original measured stiffness value) over the life of the vibratory flowmeter. The change can be caused by erosion, corrosion, coating, damage, etc. As a result, the initial factory calibration value, which may be referred to as a reference factor or FCF value, may cause a measurement bias over time as the conduits are corroded, eroded, or otherwise changed.

The change may therefore be detected by calculating a stiffness value of the conduit and comparing it to a baseline stiffness value. This comparison may be referred to as a meter or sensor assembly verification. The baseline stiffness value may be determined at or about the same time the FCF is calculated. When the current stiffness value differs from the baseline stiffness value, a change may have occurred to the conduit. Other conduit parameters may be employed in a similar manner, such as residual flexibility, sensor mass and damping, etc. However, calculating values of these and other conduit parameters may make real-time measurements difficult and can result in interruptions of a customer's process to perform the calculations. The calculation of values of the conduit parameters may be avoided by somehow using parameters of the sensor signals to detect the change in the one or more conduits of the sensor assembly. Accordingly, there is a need for using parameters of sensor signals provided by a sensor assembly to verify the sensor assembly.

As an example, the international application WO 2019/045703 A1 discloses a meter electronics and a method for detecting and identifying a change in a vibratory meter comprising a processing system which is configured for using information based on sensor signals to determine stiffness change values according to the prior art.

SUMMARY

A meter electronics for using parameters of sensor signals provided by a sensor assembly to verify the sensor assembly is provided. According to an embodiment, the meter electronics comprises a processing system including a storage system configured to store a central tendency value of a sensor assembly verification value and dispersion value of the sensor assembly verification value. The processing system is configured to obtain the central tendency value and the dispersion value from the storage system, and determine a probability based on the central tendency value and the dispersion value to detect if the central tendency value is different than a baseline sensor assembly verification value. The sensor assembly verification value is based on sensor signal parameter values and the sensor assembly verification value is one of an LPO/RPO voltage ratio value, a DRV/LPO voltage ratio value, and a DRV/RPO voltage ratio value.

A method for using parameters of sensor signals provided by a sensor assembly to verify the sensor assembly is provided. According to an embodiment, the method comprises obtaining a central tendency value of a sensor assembly verification value and a dispersion value of the sensor assembly verification value from a storage in a meter electronics of the vibratory meter and determining a probability based on the central tendency value and the dispersion value to determine if the central tendency value is different than a baseline sensor assembly verification value. The baseline sensor assembly verification value is based on sensor signal parameter values and the sensor assembly verification value is one of an LPO/RPO voltage ratio value, a DRV/LPO voltage ratio value, and a DRV/RPO voltage ratio value.

ASPECTS

According to an aspect, a meter electronics for using parameters of sensor signals provided by a sensor assembly to verify the sensor assembly comprises an interface communicatively coupled to the sensor assembly, the interface being configured to receive two sensor signals and a processing system communicatively coupled to the interface. The processing system being configured to calculate a sensor signal parameter relationship value between the two sensor signals and compare the calculated sensor signal parameter relationship value between the two sensor signals with a baseline sensor signal parameter relationship value between the two sensor signals.

Preferably, the meter electronics being configured to calculate the sensor signal parameter relationship value between the two sensor signals comprises the meter electronics being configured to calculate the sensor signal parameter relationship value between a left pick-off sensor signal voltage value and a right pick-off sensor signal voltage value.

Preferably, the meter electronics being configured to calculate the sensor signal parameter relationship value between the two sensor signals comprises the meter electronics being configured to calculate one of a ratio and a difference between two sensor signal parameter values of the two sensor signals.

Preferably, the meter electronics being configured to compare the calculated sensor signal parameter relationship value with a baseline sensor signal parameter relationship value comprises the meter electronics being configured to calculate a difference between the calculated sensor signal parameter relationship value with the baseline sensor signal parameter relationship value.

Preferably, the two sensor signals comprise two of a drive signal, a left pick-off sensor signal, and a right pick-off sensor signal.

Preferably, the meter electronics is further configured to determine a condition of the sensor assembly based on the comparison of the calculated sensor signal parameter relationship value and the baseline sensor signal parameter relationship value between the two sensor signals.

According to an aspect, a method of using parameters of sensor signals provided by a sensor assembly to verify the sensor assembly comprises calculating a sensor signal parameter relationship value between two sensor signals and comparing the calculated sensor signal parameter relationship value between the two sensor signals with a baseline sensor signal parameter relationship value between the two sensor signals.

Preferably, calculating the sensor signal parameter relationship value between the two sensor signals comprises calculating the sensor signal parameter relationship value between a left pick-off sensor signal voltage value and a right pick-off sensor signal voltage value.

Preferably, calculating the sensor signal parameter relationship value between the two sensor signals comprises calculating one of a ratio and a difference between two sensor signal parameter values of the two sensor signals.

Preferably, comparing the calculated sensor signal parameter relationship value with a baseline sensor signal parameter relationship value comprises calculating a difference between the calculated sensor signal parameter relationship value with the baseline sensor signal parameter relationship value.

Preferably, the two sensor signals comprise two of a drive signal, a left pick-off sensor signal, and a right pick-off sensor signal.

Preferably, the method further comprises determining the condition of the sensor assembly based on the comparison of the calculated sensor signal parameter relationship value and the baseline sensor signal parameter relationship value between the two sensor signals.

According to an aspect, a meter electronics for using parameters of sensor signals provided by a sensor assembly to verify the sensor assembly comprises an interface configured to receive a left pick-off sensor signal and a right pick-off sensor signal from a meter assembly and a processing system communicatively coupled to the interface. The processing system is configured to determine a current first sensor assembly verification value and a current second sensor assembly verification value, compare the current first sensor assembly verification value to a baseline first sensor assembly verification value to determine a first sensor assembly verification shift, compare the current second sensor assembly verification value to a baseline second sensor signal parameter relationship value to determine a second sensor assembly verification shift, and determine a condition of the conduit based on the first sensor assembly verification shift and the second sensor assembly verification shift. At least one of the current first sensor assembly verification value and the current second sensor assembly verification value is comprised of a sensor signal parameter relationship value.

Preferably, the first sensor assembly verification shift represents a physical stiffness change of the conduit between a driver and a left pick-off and the second sensor assembly verification shift represents a physical stiffness change of the conduit between the driver and a right pick-off.

Preferably, the sensor signal parameter relationship value is one of a ratio and a difference of two sensor signal parameter values.

Preferably, the sensor signal parameter relationship value is determined based on two of a left pick-off sensor signal parameter, a right pick-off sensor signal parameter, and a drive signal parameter.

Preferably, the processing system is further configured to provide an alarm based on the determined condition of the conduit.

Preferably, the condition of the conduit comprises at least one of an erosion, a corrosion, a damage, and a coating of the conduit of the sensor assembly.

Preferably, the processing system is further configured to determine the condition of the conduit based on at least one of a stiffness, a residual flexibility, a damping, and a mass of the conduit.

According to an aspect, a method for using parameters of sensor signals provided by a sensor assembly to verify the sensor assembly comprises determining a current first sensor assembly verification value and a current second sensor assembly verification value, comparing the current first sensor assembly verification value to a baseline first sensor assembly verification value to determine a first sensor assembly verification shift, comparing the current second sensor assembly verification value to a baseline second sensor assembly verification value to determine a second sensor assembly verification shift, and determining a condition of the conduit based on the first sensor assembly verification shift and the second sensor assembly verification shift. At least one of the current first sensor assembly verification value and the current second sensor assembly verification value is comprised of a sensor signal parameter relationship value.

Preferably, the first sensor assembly verification shift represents a physical stiffness change of the conduit between a driver and the left pick-off sensor and the second sensor assembly verification shift represents a physical stiffness change of the conduit between the driver and the right pick-off sensor.

Preferably, the sensor signal parameter relationship value is one of a ratio and a difference of two sensor signal parameter values.

Preferably, the sensor signal parameter relationship value is determined based on two of a left pick-off sensor signal parameter, a right pick-off sensor signal parameter, and a drive signal parameter.

Preferably, the method further comprises providing an alarm based on the determination of the condition of the conduit.

Preferably, the condition of the conduit comprises at least one of an erosion, a corrosion, a damage, and a coating of the conduit of the vibratory meter.

According to an aspect, a meter electronics for using parameters of sensor signals provided by a sensor assembly to verify the sensor assembly comprises a processing system including a storage system configured to store a central tendency value of a sensor assembly verification value and dispersion value of the sensor assembly verification value. The processing system is configured to obtain the central tendency value and the dispersion value from the storage system, and determine a probability based on the central tendency value and the dispersion value to detect if the central tendency value is different than a baseline sensor assembly verification value. The baseline sensor assembly verification value is based on sensor signal parameter values and the sensor assembly verification value is one of an LPO/RPO voltage ratio value, a DRV/LPO voltage ratio value, and a DRV/RPO voltage ratio value.

Preferably, the processing system being configured to determine a probability based on the central tendency value and the dispersion value comprises the processing system being configured to calculate a t-value and calculate the probability using the *t*-value.

Preferably, the processing system being configured to determine the probability based on the central tendency value and the dispersion value comprises the processing system being configured to calculate a degree-of-freedom based on a number of sensor assembly verification measurements.

Preferably, the processing system being configured to determine the probability based on the central tendency value and the dispersion value comprises the processing system being configured to calculate a standard error based on a standard deviation and the degree-of-freedom.

Preferably, the standard error is calculated using the following equation:

$$stderror_{pooled} = \sqrt{\frac{(2 \cdot (stddev_{pooled})^2)}{n_{DOF}}};$$

where:

$stddev_{pooled}$ is the standard deviation; and
$n_{DOF}$ is the degree-of-freedom.

Preferably, the dispersion value is a pooled standard deviation comprising a standard deviation of sensor assembly verification measurements and baseline sensor assembly verification measurements.

Preferably, the probability comprises a confidence interval of the central tendency value.

Preferably, the confidence interval is compared to zero, wherein if the confidence interval does not include zero, then detect that the central tendency value does not equal the baseline sensor assembly verification value, and if the confidence interval includes zero, then detect that the central tendency value equals the baseline sensor assembly verification value.

Preferably, the central tendency value is a sensor assembly verification value and the confidence interval of the sensor assembly verification value is calculated using the following equation:

$$CI = SV_{mean} \pm CI_{range};$$

where:

$CI$ is the confidence interval of the sensor assembly verification value;
$SV_{mean}$ is the sensor assembly verification value obtained from the storage system; and
$CI_{range}$ is a confidence interval range calculated based on a standard deviation and a *t*-value.

Preferably, the confidence interval range is calculated using the following equation:

$$CI_{range} = stderror_{pooled} \cdot t_{student,99.8};$$

where:

$stderror_{pooled}$ the pooled standard error of the sensor assembly verification measurements; and
$t_{student,99.8}$ is a *t*-value calculated based on a significance level and a degrees-of-freedom determined from a number of the sensor assembly verification measurements comprising the sensor assembly verification value.

Preferably, the processing system is further configured to set a bias dead band, wherein if the central tendency value is less than the bias dead band, then the sensor assembly verification value is not detected as being different than the baseline sensor assembly verification value.

Preferably, the processing system being configured to determine the probability based on the central tendency value and the dispersion value comprises the processing system being configured to determine a confidence interval based on the central tendency value and the dispersion value.

Preferably, the baseline sensor assembly verification value comprises a central tendency value and a dispersion value of the baseline sensor assembly verification value.

Preferably, the central tendency value of the baseline sensor assembly verification value is a mean of the baseline sensor assembly verification value and the dispersion value of the baseline sensor assembly verification value is a standard deviation of the baseline sensor assembly verification value.

Preferably, the meter electronics being configured to detect if the central tendency value is different than the baseline sensor assembly verification value comprises the meter electronics being configured to determine if the probability based on the central tendency value and the dispersion value does not overlap with a probability of the baseline sensor assembly verification value.

Preferably, the probability based on the central tendency value and the dispersion value comprises a confidence interval determined based on the central tendency value and dispersion value and the probability of the baseline sensor assembly verification value comprises a confidence interval determined based on baseline sensor assembly verification measurements.

Preferably, the meter electronics being configured to determine if the probability based on the central tendency value does not overlap with the probability of the baseline sensor assembly verification value comprises the meter electronics being configured to:

calculate the following equations:

$$LHS = |\mu_{measured} - \mu_{baseline}|;$$

$$RHS = 2 * (\sigma_{measured} + \sigma_{baseline});$$

and
determine that the probability of the central tendency value and the dispersion value obtained from storage system overlaps with the probability of the baseline sensor assembly verification value if:

$$LHS < RHS.$$

Preferably, the baseline standard deviation is calculated according to the following equation:

$$\sigma_{baseline} = dead\ band * \mu_{baseline}.$$

Accordingly to an aspect, a method for using parameters of sensor signals provided by a sensor assembly to verify the sensor assembly comprises obtaining a central tendency value of a sensor assembly verification value and a dispersion value of the sensor assembly verification value from a storage in a meter electronics of the vibratory meter and determining a probability based on the central tendency value and the dispersion value to determine if the central tendency value is different than a baseline sensor assembly verification value. The baseline sensor assembly verification value is based on sensor signal parameter values and the sensor assembly verification value is one of an LPO/RPO voltage ratio value, a DRV/LPO voltage ratio value, and a DRV/RPO voltage ratio value.

Preferably, determining the probability based on the central tendency value and the dispersion value comprises calculating a *t*-value and calculating the probability using the *t*-value.

Preferably, determining the probability based on the central tendency value and the dispersion value comprises calculating a degree-of-freedom based on a number of sensor assembly verification measurements.

Preferably, determining the probability based on the central tendency value and the dispersion value comprises calculating a standard error based on a standard deviation and the degrees-of-freedom.

Preferably, the standard error is calculated using the following equation:

$$stderror_{pooled} = \sqrt{\frac{(2 \cdot (stddev_{pooled})^2)}{n_{DOF}}};$$

where:

$stddev_{pooled}$ is the standard deviation; and
$n_{DOF}$ is the degrees-of-freedom.

Preferably, the dispersion value is a pooled standard deviation comprising a standard deviation of sensor assembly verification measurements and baseline sensor assembly verification measurements.

Preferably, the probability comprises a confidence interval of the central tendency value.

Preferably, the confidence interval is compared to zero, wherein if the confidence interval does not include zero, then detect that the central tendency value does not equal the baseline sensor assembly verification value, and if the confidence interval includes zero, then detect that the central tendency value equals the baseline sensor assembly verification value.

Preferably, the central tendency value is the sensor assembly verification value and the confidence interval of the sensor assembly verification value is calculated using the following equation:

$$CI = SV_{mean} \pm CI_{range};$$

where:

CI is the confidence interval of the sensor assembly verification value;
$SV_{mean}$ is the sensor assembly verification value obtained from the storage system (204); and
$CI_{range}$ is a confidence interval range calculated based on a standard deviation and a t-value.

Preferably, the confidence interval range is calculated using the following equation:

$$CI_{range} = stderror_{pooled} \cdot t_{student,99.8};$$

where:

$stderror_{pooled}$ the pooled standard error of the sensor assembly verification measurements; and
$t_{student,99.8}$ is a t-value calculated based on a significance level and a degrees-of-freedom determined from a number of sensor assembly verification measurements comprising the sensor assembly verification value.

Preferably, the method further comprises setting a bias dead band, wherein if the central tendency value is less than the bias dead band, then the sensor assembly verification value is not detected as being different than the baseline sensor assembly verification value.

Preferably, determining the probability based on the central tendency value and the dispersion value comprises determining a confidence interval based on the central tendency value and the dispersion value.

Preferably, the baseline sensor assembly verification value comprises a central tendency value and a dispersion value of the baseline sensor assembly verification value.

Preferably, the central tendency value of baseline sensor assembly verification value is a mean of the baseline sensor assembly verification value and the dispersion value of the baseline sensor assembly verification value is a standard deviation of the baseline sensor assembly verification value.

Preferably, detecting if the central tendency value is different than the baseline sensor assembly verification value comprises determining if the probability based on the central tendency value and the dispersion value does not overlap with a probability of the baseline sensor assembly verification value.

Preferably, the probability based on the central tendency value and the dispersion value comprises a confidence interval determined based on the central tendency value and the dispersion value and the probability of the baseline sensor assembly verification value comprises a confidence interval determined based on baseline sensor assembly verification measurements.

Preferably, determining if the probability based on the central tendency value and the dispersion value does not overlap with the probability of the baseline sensor assembly verification value comprises calculating the following equations:

$$LHS = |\mu_{measured} - \mu_{baseline}|;$$

$$RHS = 2 * (\sigma_{measured} + \sigma_{baseline});$$

and determining that the probability of the central tendency value and the dispersion value obtained from the storage overlaps with the probability of the baseline sensor assembly verification value if:

$$LHS < RHS.$$

Preferably, the standard deviation of the baseline system assembly verification value is calculated according to the following equation:

$$\sigma_{baseline} = dead\ band * \mu_{baseline}.$$

BRIEF DESCRIPTION OF THE DRAWINGS

The same reference number represents the same element on all drawings. It should be understood that the drawings are not necessarily to scale.

FIG. 1 shows a vibratory meter 5 configured to use parameters of sensor signals provided by a sensor assembly to verify the sensor assembly.

FIG. 2 shows a block diagram of the vibratory meter 5, including a block diagram representation of the meter electronics 20, configured to use parameters of sensor signals provided by a sensor assembly to verify the sensor assembly.

FIG. 3 shows a meter electronics 20 configured to use parameters of sensor signals provided by a sensor assembly to verify the sensor assembly.

FIG. 4 shows a graph 400 illustrating a correspondence between a stiffness of a sensor assembly and a difference between sensor signal parameters.

FIG. 5 shows a method 500 of using parameters of sensor signals of a sensor assembly, such as the sensor assembly 10 described above, to verify the sensor assembly.

FIG. 6 shows a method 600 of using parameters of sensor signals provided by a sensor assembly to verify the sensor assembly.

FIG. 7 shows a method 700 of using parameters of sensor signals provided by a sensor assembly to verify the sensor assembly.

DETAILED DESCRIPTION

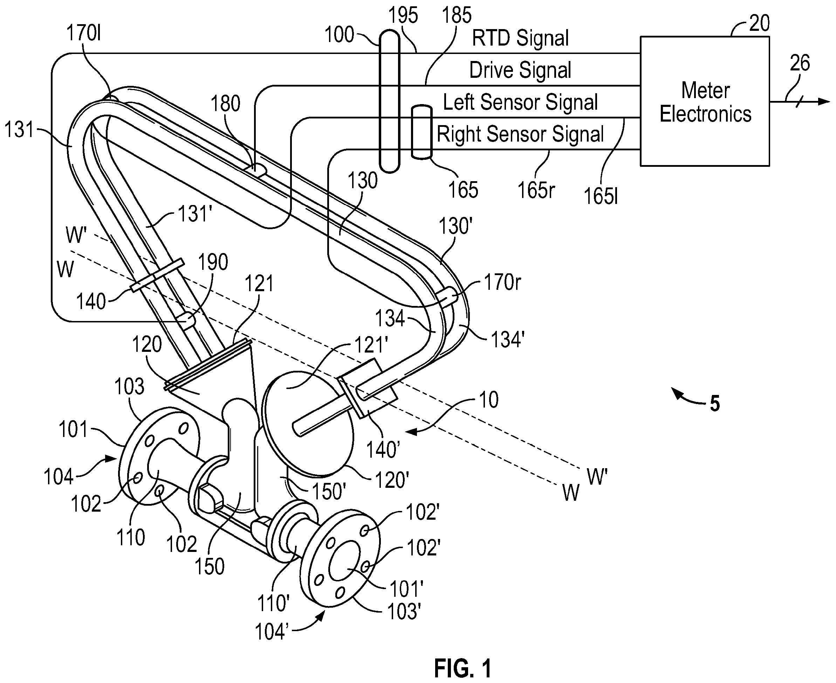

FIGS. 1-7 and the following description depict specific examples to teach those skilled in the art how to make and use the best mode of embodiments of using parameters of sensor signals provided by a sensor assembly to verify the sensor assembly. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of using sensor signals provided by the sensor assembly to detect the change in the sensor assembly. As a result, the embodiments described below are not limited to the specific examples described below, but only by the claims and their equivalents.

**FIG. 1** shows a vibratory meter 5 configured to use parameters of sensor signals provided by a sensor assembly to verify the sensor assembly. As shown in FIG. 1, the vibratory meter 5 comprises a sensor assembly 10 and meter electronics 20. The sensor assembly 10 responds to mass flow rate and density of a process material. The meter electronics 20 is connected to the sensor assembly 10 via leads conveying sensor signals 100. As can be appreciated, the sensor signals 100 include the RTD signal, drive signal, and the left and right sensor signals. The meter electronics 20 may be configured to use the sensor signals 100 to calculate and provide density, mass flow rate, temperature information, or the like, over port 26.

The sensor assembly 10 includes a pair of manifolds 150 and 150', flanges 103 and 103' having flange necks 110 and 110', a pair of parallel conduits 130 and 130', driver 180, resistive temperature detector (RTD) 190, and a pair of pick-off sensors 1701 and 170r. Conduits 130 and 130' have two essentially straight inlet legs 131, 131' and outlet legs 134, 134', which converge towards each other at conduit mounting blocks 120 and 120'. The conduits 130, 130' bend at two symmetrical locations along their length and are essentially parallel throughout their length. Brace bars 140 and 140' serve to define the axis W and W' about which each conduit 130, 130' oscillates. The legs 131, 131' and 134, 134' of the conduits 130, 130' are fixedly attached to conduit mounting blocks 120 and 120' and these blocks, in turn, are fixedly attached to manifolds 150 and 150'. This provides a continuous closed material path through sensor assembly 10.

When flanges 103 and 103', having holes 102 and 102' are connected, via inlet end 104 and outlet end 104' into a process line (not shown) which carries the process material that is being measured, material enters inlet end 104 of the meter through an orifice 101 in the flange 103 and is conducted through the manifold 150 to the conduit mounting block 120 having a surface 121. Within the manifold 150 the material is divided and routed through the conduits 130, 130'. Upon exiting the conduits 130, 130', the process material is recombined in a single stream within the block 120' having a surface 121' and the manifold 150' and is thereafter routed to outlet end 104' connected by the flange 103' having holes 102' to the process line (not shown).

The conduits 130, 130' are selected and appropriately mounted to the conduit mounting blocks 120, 120' so as to have substantially the same mass distribution, moments of inertia and Young's modulus about bending axes W--W and W'--W', respectively. These bending axes go through the brace bars 140, 140'. Inasmuch as the Young's modulus of the conduits change with temperature, and this change affects the calculation of flow and density, RTD 190 is mounted to conduit 130' to continuously measure the temperature of the conduit 130'. The temperature of the conduit 130' and hence the voltage appearing across the RTD 190 for a given current passing therethrough is governed by the temperature of the material passing through the conduit 130'. The temperature dependent voltage appearing across the RTD 190 is used in a well-known method by the meter electronics 20 to compensate for the change in elastic modulus of the conduits 130, 130' due to any changes in conduit temperature. The RTD 190 is connected to the meter electronics 20 by lead 195.

Both of the conduits 130, 130' are driven by driver 180 in opposite directions about their respective bending axes W and W' and at what is termed the first out-of-phase bending mode of the vibratory meter. This driver 180 may comprise any one of many well-known arrangements, such as a magnet mounted to the conduit 130' and an opposing coil mounted to the conduit 130 and through which an alternating current is passed for vibrating both conduits 130, 130'. A suitable drive signal 185 is applied by the meter electronics 20, via a lead, to the driver 180.

The meter electronics 20 receives the RTD temperature signal on lead 195, and sensor signals 165 appearing on leads 100 carrying left and right sensor signals 165l, 165r, respectively. The meter electronics 20 produces the drive signal 185 appearing on the lead to driver 180 and vibrate conduits 130, 130'. The meter electronics 20 processes the left and right sensor signals 165l, 165r and the RTD signal from lead 195 to compute the mass flow rate and the density of the material passing through sensor assembly 10. This information, along with other information, is applied by meter electronics 20 over path 26 as a signal. A more detailed discussion of the meter electronics 20 follows.

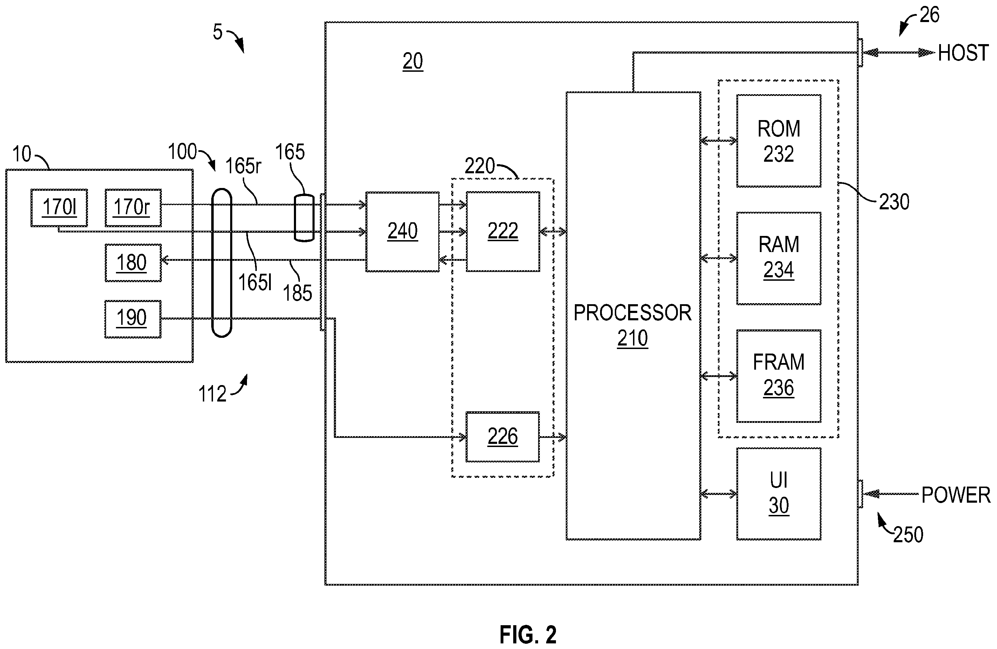

**FIG. 2** shows a block diagram of the vibratory meter 5, including a block diagram representation of the meter electronics 20, configured to use parameters of sensor signals provided by a sensor assembly to verify the sensor assembly. As shown in FIG. 2, the meter electronics 20 is communicatively coupled to the sensor assembly 10. As described in the foregoing with reference to FIG. 2, the sensor assembly 10 includes the left and right pick-off sensors 170l, 170r, driver 180, and temperature sensor 190, which are communicatively coupled to the meter electronics 20 via the set of leads 100 through a communications channel 112.

The meter electronics 20 provides a drive signal 185 via the leads 100. More specifically, the meter electronics 20 provides a drive signal 185 to the driver 180 in the sensor assembly 10. In addition, sensor signals 165 comprising the left sensor signal 165l and the right sensor signal 165r are provided by the sensor assembly 10. More specifically, in the embodiment shown, the sensor signals 165 are provided by the left and right pick-off sensor 170l, 170r in the sensor assembly 10. As can be appreciated, the sensor signals 165 are respectively provided to the meter electronics 20 through the communications channel 112.

The meter electronics 20 includes a processor 210 communicatively coupled to one or more signal processors 220 and one or more memories 230. The processor 210 is also communicatively coupled to a user interface 30. The processor 210 is communicatively coupled with the host via a communication port over the port 26 and receives electrical power via an electrical power port 250. The processor 210 may be a microprocessor although any suitable processor may be employed. For example, the processor 210 may be comprised of sub-processors, such as a multi-core processor, serial communication ports, peripheral interfaces (e.g., serial peripheral interface), on-chip memory, I/O ports, and/or the like. In these and other embodiments, the processor 210 is configured to perform operations on received and processed signals, such as digitized signals.

The processor 210 may receive digitized sensor signals from the one or more signal processors 220. The processor 210 is also configured to provide information, such as a phase difference, a property of a fluid in the sensor assembly 10, or the like. The processor 210 may provide the information to the host through the communication port. The processor 210 may also be configured to communicate with the one or more memories 230 to receive and/or store information in the one or more memories 230. For example, the processor 210 may receive calibration factors and/or sensor assembly zeros (e.g., phase difference when there is zero flow) from the one or more memories 230. Each of the calibration factors and/or sensor assembly zeros may respectively be associated with the vibratory meter 5 and/or the sensor assembly 10. The processor 210 may use the calibration factors to process digitized sensor signals received from the one or more signal processors 220.

The one or more signal processors 220 is shown as being comprised of an encoder/decoder (CODEC) 222 and an analog-to-digital converter (ADC) 226. The one or more signal processors 220 may condition analog signals, digitize the conditioned analog signals, and/or provide the digitized signals. The CODEC 222 is configured to receive the sensor signals 165 from the left and right pick-off sensors 170l, 170r. The CODEC 222 is also configured to provide the drive signal 185 to the driver 180. In alternative embodiments, more or fewer signal processors may be employed.

As shown, the sensor signals 165 are provided to the CODEC 222 via a signal conditioner 240. The drive signal 185 is provided to the driver 180 via the signal conditioner 240. Although the signal conditioner 240 is shown as a single block, the signal conditioner 240 may be comprised of signal conditioning components, such as two or more op-amps, filters, such as low pass filters, voltage-to-current amplifiers, or the like. For example, the sensor signals 165 may be amplified by a first amplifier and the drive signal 185 may be amplified by the voltage-to-current amplifier. The amplification can ensure that the magnitude of the sensor signals 165 is approximate the full-scale range of the CODEC 222.

In the embodiment shown, the one or more memories 230 is comprised of a read-only memory (ROM) 232, random access memory (RAM) 234, and a ferroelectric random-access memory (FRAM) 236. However, in alternative embodiments, the one or more memories 230 may be comprised of more or fewer memories. Additionally, or alternatively, the one or more memories 230 may be comprised of different types of memory (e.g., volatile, non-volatile, etc.). For example, a different type of non-volatile memory, such as, for example, erasable programmable read only memory (EPROM), or the like, may be employed instead of the FRAM 236. The one or more memories 230 may be a storage configured to store process data, such as drive or sensor signals, mass flow rate or density measurements, etc.

A mass flow rate measurement can be generated according to the equation:

$$\dot{m} = FCF[\Delta t - \Delta t_0]; \qquad\qquad [1]$$

where:

$\dot{m}$ is a measured mass flow rate;
$FCF$ is a flow calibration factor;
$\Delta t$ is a measured time delay; and
$\Delta t_0$ is a zero-flow time delay.

The measured time delay $\Delta t$ comprises an operationally-derived (*i.e.*, measured) time delay value comprising the time delay existing between the pick-off sensor signals, such as where the time delay is due to Coriolis effects related to mass flow rate through the vibratory meter 5. The measured time delay $\Delta t$ is a direct measurement of a mass flow rate of the flow material as it flows through the vibratory meter 5. The zero-flow time delay $\Delta t_0$ comprises a time delay at a zero flow. The zero-flow time delay $\Delta t_0$ is a zero-flow value that may be determined at the factory and programmed into the vibratory meter 5. The zero-flow time delay $\Delta t_0$ is an exemplary zero-flow value. Other zero-flow values may be employed, such as a phase difference, time difference, or the like, that are determined at zero flow conditions. A value of the zero-flow time delay $\Delta t_0$ may not change, even where flow conditions are changing. A mass flow rate value of the material flowing through the vibratory meter 5 is determined by multiplying a difference between measured time delay $\Delta t$ and a reference zero-flow value $\Delta t_0$ by the flow calibration factor *FCF*. The flow calibration factor *FCF* is proportional to a physical stiffness of the vibratory meter.

As to density, a resonance frequency at which each conduit 130, 130' may vibrate may be a function of the square root of a spring constant of the conduit 130, 130' divided by the total mass of the conduit 130, 130' having a material. The total mass of the conduit 130, 130' having the material may be a mass of the conduit 130, 130' plus a mass of a material inside the conduit 130, 130'. The mass of the material in the conduit 130, 130' is directly proportional to the density of the material. Therefore, the density of this material may be proportional to the square of a period at which the conduit 130, 130' containing the material oscillates multiplied by the spring constant of the conduit 130, 130'. Hence, by determining the period at which the conduit 130, 130' oscillates and by appropriately scaling the result, an accurate measure of the density of the material contained by the conduit 130, 130' can be obtained. The meter electronics 20 can determine the period or resonance frequency using the sensor signals 165 and/or the drive signal 185. The conduits 130, 130' may oscillate with more than one vibration mode. As will be explained in more detail in the following, the meter electronics 20 may also perform verification of the sensor assembly.

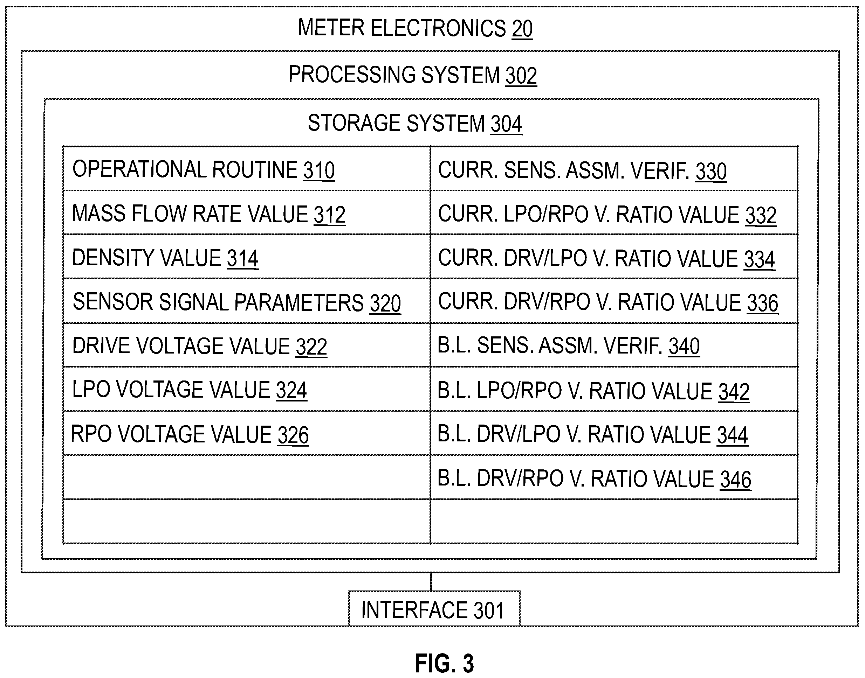

**FIG. 3** shows the meter electronics 20 configured to use parameters of sensor signals 100 provided by the sensor assembly 10 to verify the sensor assembly 10. As shown in FIG. 3, the meter electronics 20 includes an interface 301 and a processing system 302. The meter electronics 20 receives a vibrational response from a sensor assembly, such as the sensor assembly 10 described above for example. The meter electronics 20 can process the vibrational response to obtain flow properties of the flow material flowing through the sensor assembly 10. The meter electronics 20 may also perform checks, verifications, calibration routines, and/or the like, to ensure the flow properties of the flow material are accurately measured.

The interface 301 may receive the sensor signals 165 from one of the pick-off sensors 170l, 170r shown in FIGS. 1 and 2. The interface 301 may also be configured to receive a drive signal 185 from, for example, the signal conditioner 240. Although the drive signal 185 is shown as being provided by signal conditioner 240, a back-EMF may be provided from the sensor assembly 10 to the meter electronics 20 due to vibration of the conduits 130 in the sensor assembly 10. Accordingly, the interface 301 may be configured to receive the sensor signals 100 shown in FIG. 2.

The interface 301 can perform any necessary or desired signal conditioning, such as any manner of formatting, amplification, buffering, etc. Alternatively, some or all of the signal conditioning can be performed in the processing system 302. In addition, the interface 301 can enable communications between the meter electronics 20 and external devices. The interface 301 can be capable of any manner of electronic, optical, or wireless communication. The interface 301 can provide information based on the vibrational response. The interface 301 may be coupled with a digitizer, such as the CODEC 222 shown in FIG. 2, wherein the sensor signal comprises an analog sensor signal. The digitizer samples and digitizes an analog sensor signal and produces a digitized sensor signal.

The processing system 302 conducts operations of the meter electronics 20 and processes flow measurements from the sensor assembly 10. The processing system 302 executes one or more processing routines and thereby processes the flow measurements in order to produce one or more flow properties. The processing system 302 is communicatively coupled to the interface 301 and is configured to receive the information from the interface 301.

The processing system 302 can comprise a general-purpose computer, a micro-processing system, a logic circuit, or some other general purpose or customized processing device. Additionally, or alternatively, the processing system 302 can be distributed among multiple processing devices. The processing system 302 can also include any manner of integral or independent electronic storage medium, such as the storage system 304.

The storage system 304 can store vibratory meter parameters and data, software routines, constant values, and variable values. In one embodiment, the storage system 304 includes routines that are executed by the processing system 302, such as an operational routine 310. The processing system 302 may further be configured to execute other routines such as a zero-calibration routine and zero-verification routine of the vibratory meter 5. The storage system can also store statistical values, such as a mean, standard deviation, confidence interval, etc., or the like.

The operational routine 310 may determine a mass flow rate value 312 and a density value 314 based on the sensor signals received by the interface 301. The mass flow rate value 312 may be a frequency independent mass flow rate value, a directly measured mass flow rate value, or the like. The mass flow rate value 312 may be determined from the sensor signals, such as a time delay between a left pick-off sensor signal and a right pick-off sensor signal. The density value 314 may also be determined from the sensor signals by, for example, determining a frequency from one or both of the left and right pick-off sensor signals.

As discussed above, a sensor assembly, such as the sensor assembly 10 described with reference to FIGS. 1 and 2, may be verified by calculating a conduit parameter value, such as a stiffness, mass, damping, residual flexibility, etc., of the sensor assembly and comparing the calculated conduit parameter value to a baseline conduit parameter value. However, such calculations may make real-time measurements difficult and can result in interruption of a customer's process. In addition, some calculations, such as, for example, a gain decay method, that may be used to calculate the conduit parameter value(s) may be sensitive to system noise and process condition changes. This can limit a sensor assembly verification routine to low or no flow conditions, or other conditions sufficiently stable for the calculations of the conduit parameter values. As will be described in more detail in the following, these and other issues may be avoided by using parameters of sensor signals provided by a sensor assembly to verify the sensor assembly.

Still referring to FIG. 3, the storage system 304 may include sensor signal parameter values 320. As shown in FIG. 3, the sensor signal parameter values 320 may include, for example, a drive voltage value 322, an LPO voltage value 324, and an RPO voltage value 326. The drive voltage value 322, LPO voltage value 324, and/or RPO voltage value 326 may be determined, for example, in real-time during a customer process, during calibration using a known fluid, and/or the like. Accordingly, the drive voltage value 322, LPO voltage value 324, and/or RPO voltage value 326 may or may not be the same sensor parameter values used to calculate the mass flow rate value 312 and/or the density value 314. As can be appreciated, the drive voltage value 322, the LPO voltage value 324, and/or the RPO voltage value 326 may be measured, determined, obtained, and/or calculated substantially contemporaneously.

The sensor signal parameter values 320 may be used to calculate one or more current sensor assembly verification values 330 based on sensor signal parameter values 320. For example, the meter electronics 20 or, with more particularity, the processing system 302, may be configured to determine a sensor signal parameter value, such as the drive voltage value 322, LPO voltage value 324, and/or the RPO voltage value 326, of a sensor signal. The sensor signal parameter may be an amplitude of the sensor signal although any suitable sensor signal parameter may be employed. As can be appreciated, the amplitude of the sensor signal may be a voltage, current, or power, although any suitable amplitude may be employed. The meter electronics 20 or processing system 302 may also be configured to calculate sensor signal parameter relationship values from the sensor signal parameter values. The meter electronics 20 or, with more particularity, the processing system 302, may be configured to store the sensor signal parameter relationship values in the storage system 304 as current sensor assembly verification values 330.

As shown in FIG. 3, the current sensor assembly verification values 330 include sensor signal parameter relationship values such as a current LPO/RPO voltage ratio value 332, a current DRV/LPO voltage ratio value 334, and a current DRV/RPO voltage ratio value 336, although more or fewer current sensor assembly verification values 330 may be measured, determined, obtained, calculated, and/or stored by the shown meter electronics 20 or alternative meter electronics. As can be appreciated, the current LPO/RPO voltage ratio value 332, current DRV/LPO voltage ratio value 334, and current DRV/RPO voltage ratio value 336 may be sensor signal electrical parameter relationship values. For example, alternative meter electronics may be configured to only measure, determine, obtain, calculate, and/or store pick-off sensor signal relationship values, such as the current LPO/RPO voltage ratio value 332 because the current LPO/RPO voltage ratio value 332 may be used to reliably detect a significant number of, such as a majority of, changes to conduit under process conditions that are dissimilar to calibration conditions under which baseline sensor assembly verification values are calculated.

By way of illustration, a baseline LPO/RPO voltage ratio value may be calculated during calibration of an FCF for a given vibratory meter. After the vibratory meter is installed at a customer site, the customer may perform a sensor assembly verification routine while the vibratory meter was measuring a mass flow rate and/or density of a process fluid under process conditions that differ from the conditions under which the baseline LPO/RPO voltage ratio value is calculated, as will be explained in more detail in the following.

A gain-decay method of calculating a stiffness value of a conduit may use the following equations:

$$K_L = \frac{I_{DR}BL_{PO}BL_{DR}\omega_0}{2\zeta_L V_{LPO}};$$

[2]

$$K_R = \frac{I_{DR}BL_{PO}BL_{DR}\omega_0}{2\zeta_R V_{RPO}};$$

[3]

where:

$I_{DR}$ is a drive current;
$BL_{PO}$ is a pick-off sensitivity factor that is a function of temperature;
$BL_{DR}$ is a driver sensitivity factor that is a function of temperature;
$\omega_0$ is a resonant frequency of the conduit;
$\zeta_L$ is a damping coefficient associated with a left portion of the conduit;
$\zeta_R$ is a damping coefficient associated with a right portion of the conduit;
$V_{LPO}$ is a voltage of the left pick-off sensor;
$V_{RPO}$ is a voltage of the right pick-off sensor;
$K_L$ is a stiffness on the left side of the conduit corresponding to the left pick-off sensor signal ("left stiffness"); and
$K_R$ is a stiffness on the right side of the conduit corresponding to the right pick-off sensor signal ("right stiffness").

As discussed above, stiffness measurements require calculations that may make real-time measurements difficult and may require that a customer interrupt a process. To determine how to avoid such issues, a ratio of the above right stiffness may be taken as follows:

$$\frac{K_R}{K_L} = \frac{\left(\frac{I_{DR}BL_{PO}BL_{DR}\omega_0}{2\zeta_R V_{RPO}}\right)}{\left(\frac{I_{DR}BL_{PO}BL_{DR}\omega_0}{2\zeta_L V_{LPO}}\right)}.$$

[4]

As can be appreciated, several terms in equation [4] cancel. More specifically, the drive current and the tube frequency terms cancel. The pick-off and driver sensitivity terms $BL_{PO}$, $BL_{DR}$ may be assumed to be the same or can be compensated for later. As a result, the following relationship can be obtained:

$$\left(\frac{\zeta_R}{\zeta_L}\right)\frac{K_R}{K_L} = \frac{V_{LPO}}{V_{RPO}}.$$

[5]

Equation [5] shows that the ratio of the voltage of left and right pick-off signals $\frac{V_{LPO}}{V_{RPO}}$ is equivalent to the reciprocal of the ratio of the stiffness multiplied by the damping term $\left(\frac{\zeta_R}{\zeta_L}\right)\frac{K_R}{K_L}$. Accordingly, a change in either the left or right tube damping or the left and right tube stiffness may result in a change detected by taking the ratio of the pick-off voltages. As discussed above, the sensor signal parameter may be an amplitude of the sensor signal. Accordingly, equation [5] can be generalized to a ratio of, for example, amplitudes (e.g., voltage, current, power, etc.) of the sensor signals: $A_{LPO}/A_{RPO}$.

As can be appreciated, the voltages of the left and right pick-off sensor signals are parameters of the sensor signals and therefore do not require calculations similar to those required to calculate conduit parameter values, such as the stiffness of the conduits. In addition, above equation [5] shows that the ratio of the voltages of the left and right pick-off sensor signals can be used to detect a change in the stiffness. The change that can be detected may be limited to non-symmetric changes in the left and right stiffness of a conduit. More specifically, if the change in the conduit causes proportional changes in the left and right stiffness, then the ratio of the voltages may not detect the change.

Symmetric changes to the conduit may be detected by determining if the voltage of the left sensor signal or the volage of the right sensor signal changed relative to a baseline value. For example, a ratio of the voltage of the left pick-off sensor signal and the drive signal and a ratio of the voltage of the right pick-off sensor signal and the voltage of the drive signal may be compared to their respective baseline values. However, such a comparison may require that the conditions of the sensor assembly be the same as when a baseline value is determined. Accordingly, to detect symmetric changes to the conduits of the vibratory meter with parameters of the sensor signals, the customer process may need to be interrupted but the calculations required for stiffness values may be avoided.

Still referring to FIG. 3, the storage system may include baseline sensor assembly verification values 340. The baseline sensor assembly verification values 340 may include baseline sensor signal parameter relationship values. For example, as shown in FIG. 3, the baseline sensor assembly verification values 340 may include baseline sensor signal parameter relationship values, such as a baseline LPO/RPO voltage ratio value 342, a baseline DRV/LPO voltage ratio value 344, and a baseline DRV/RPO voltage ratio value 346. The "DRV" term may be a value of voltage of the drive signal provided to the driver, which may be the same as the drive voltage value 322, although any suitable sensor signal parameter may be employed. Similarly, the "LPO" and "RPO" terms may respectively be left and right pick-off voltage values, which may be the same as the LPO and RPO voltage values 324, 326, although any suitable sensor signal parameter may be employed.

The baseline sensor assembly verification values 340 may be determined during factory calibration, a customer calibration, or by any other suitable routine that establishes a reference value against which later calculated values can be compared. The baseline sensor assembly verification values 340 may be associated with a flow calibration factor being used in flow rate measurements (e.g., an operational FCF) determined contemporaneously with the baseline sensor assembly verification values 340. Accordingly, changes to the one or more conduits since the operational FCF and the baseline sensor assembly verification values 340 were determined may result in incorrect measurements.

An LPO/RPO voltage ratio value, such as the current LPO/RPO voltage ratio value 332 discussed above with reference to FIG. 3, may be used to detect a change in a conduit of a sensor assembly. That is, a sensor assembly verification value shift can be used to detect a change in a conduit of the sensor assembly. For example, a ratio shift, such as a voltage ratio shift, may be defined as a difference between the current LPO/RPO voltage ratio value 332 and the baseline LPO/RPO voltage ratio value 342. The ratio shift may be expressed as a percentage of the baseline LPO/RPO voltage ratio value 342.

As can be appreciated, a viable sensor assembly verification should indicate that no change in the one or more conduits has occurred when no change has occurred in the conduits. As can also be appreciated, this should be true at different flow rates if the sensor assembly verification is to be viable during process flow conditions. The following table shows that that the voltage ratio shift can be relatively small over a full range of flow rates. More specifically, each flow meter type was subjected to no-flow and maximal flow conditions. A percent shift between the LPO/RPO voltage ratio value at no-flow condition and the LPO/RPO voltage ratio value at maximal flow condition was calculated for each type of flow meter. The results were tabulated and are shown in below Table 1.

Table 1. Percent voltage ratio shift between no-flow and maximal flow conditions in one or more conduits of different types of vibratory meters.

| Vibratory meter type | Percent shift in the $\frac{V_{LPO}}{V_{RPO}}$ ratio from zero flow rate to maximum test flow rate | Maximum test flow rate as a percent of maximum rated flow rate |
|---|---|---|
| Meter Type A | 0.069 | 100% |
| Meter Type B | 0.026 | 100% |
| Meter Type C | 0.001 | 100% |
| Meter Type D | 0.041 | 100% |
| Meter Type E | 0.002 | 100% |
| Meter Type F | 0.039 | 100% |
| Meter Type G | 0.044 | 75% |
| Meter Type H | 0.002 | 100% |
| Meter Type I | 0.007 | 100% |

As can be appreciated, the percentage values of the voltage ratio shift are very small over various types of flow meters subjected to no-flow and maximal flow rate conditions where change has not occurred in the one or more conduits. This indicates that a change in the LPO/RPO voltage ratio is likely not due to differing flow rates. Accordingly, the LPO/RPO voltage ratio may be a reliable indicator of a condition of one or more conduits. For example, a change in the LPO/RPO voltage ratio relative to a baseline LPO/RPO voltage ratio is not likely to be due to any change in a flow rate of a material flowing through the one or more conduits.

A reliable indicator of a change in one or more conduits of a sensor assembly may also need to be correlated with a mechanical property of the one or more conduits. For example, if a change in the one or more conduits causes the LPO/RPO voltage ratio to have a percentage change that is equal to a percentage change in a stiffness, then the LPO/RPO voltage ratio may be a reliable indicator of change in the one or more conduits. The following table shows that the ratio shift is present in various types of meters when a change in the one or more conduits is caused by an etchant in the one or more conduits of each type of meter.

Table 2. Etch test results for sensor assembly type A communicatively coupled to meter electronics types 1 or 2.

|  | Meter Type A1 Stiffness ($K$) change | Meter Type A2 Stiffness ($K$) change | Meter Type A2 $V_{LPO}/V_{RPO}$ | Meter Type A2 $K_{RPO}/K_{LPO}$ | Meter Type A1 $K_{LPO}/K_{RPO}$ |
|---|---|---|---|---|---|
| LPO | -4.18% | -4.03% | -1.86% | -1.86% | -1.86% |
| RPO | -2.36% | -2.22% | | | |

As can be appreciated, the shift in the LPO/RPO voltage ratio is equal to the shift in the ratio of the LPO/RPO stiffness. As can also be appreciated, the shift was independent of the meter electronics attached to the sensor assembly. Similar results are obtained with a different sensor assembly, which are illustrated in the following Table 3.

Table 3. Etch test results for sensor assembly type B communicatively coupled to meter electronics types 1 or 2.

|  | Meter Type B1 Stiffness ($K$) change | Meter Type B2 Stiffness ($K$) change | Meter Type B2 $V_{LPO}/V_{RPO}$ | Meter Type B2 $K_{RPO}/K_{LPO}$ | Meter Type B1 $K_{LPO}/K_{RPO}$ |
|---|---|---|---|---|---|
| LPO | -0.67% | -0.77% | 0.40% | 0.39% | 0.40% |
| RPO | -0.27% | -0.38% | | | |

Accordingly, a parameter, such as an LPO/RPO voltage ratio value, of sensor signals provided by a sensor assembly can detect a change in one or more conduits of a sensor assembly. As can be appreciated, other parameters may be employed, including those that are based on current, power, resistance, etc. of the sensor signals from the sensor assembly. Additionally or alternatively, other parameter relationships may be employed, such as a difference between the parameters of the sensor signals. Parameters of signals other than a sensor signal may additionally be used, such as a voltage of a drive signal. The parameter of the sensor signal is not calculated and may consistently detect changes in the one or more conduits of the sensor assembly.

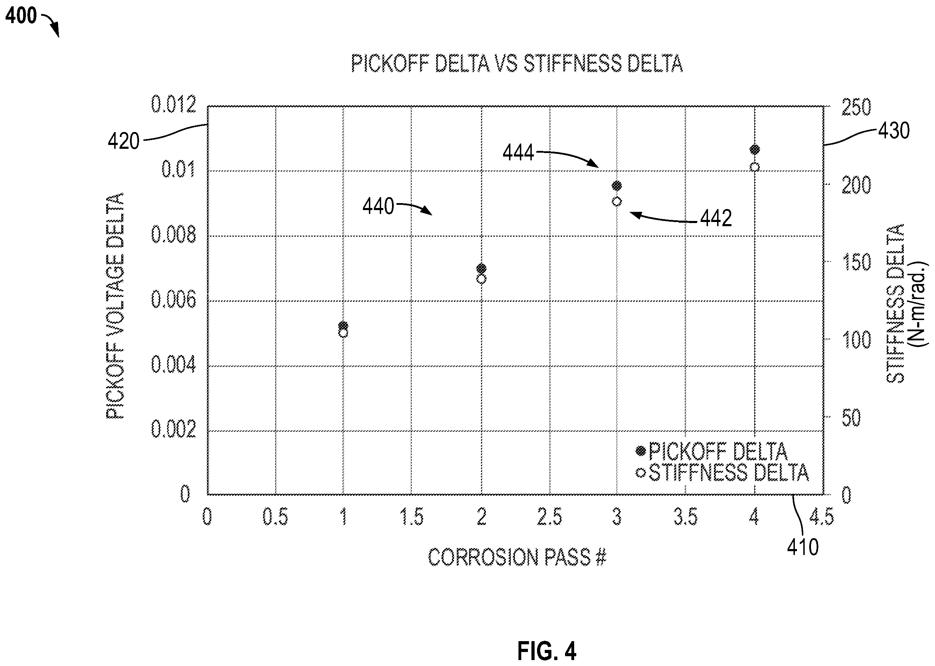

**FIG. 4** shows a graph 400 illustrating a correspondence between a stiffness of a sensor assembly and a difference between sensor signal parameters. As shown in FIG. 4, the graph 400 includes a corrosion pass axis 410, a pick-off voltage delta axis 420, and stiffness delta axis 430. The corrosion pass axis 410 is unitless, the pick-off voltage delta axis 420 is in units of volts, and the stiffness delta axis 430 is in units of Newton-meters per radian, although any suitable units may be employed. The graph 400 also includes a sensor assembly verification value delta plot 440. As shown in FIG. 4, the sensor assembly verification value delta plot 440 includes a stiffness delta plot 442 and a pick-off delta plot 444.

As can be appreciated, the stiffness delta plot 442 and the pick-off delta plot 444 are approximately linear with respect to the corrosion pass axis 410. As can also be appreciated, the stiffness delta plot 442 and the pick-off delta plot 444, although at different abscissa scaling, have an approximately corresponding slope. Accordingly, a linear relationship may be present between pick-off voltage delta values and stiffness delta values, which suggests that the pick-off voltage delta may reliably detect changes in a conduit of a sensor assembly that can cause a stiffness shift.

As discussed above with reference to FIG. 3, one or more comparisons between a current sensor assembly verification value, such as one of the current sensor assembly verification values 330 and a baseline sensor assembly verification value, such as one of the baseline sensor assembly verification values 340, may be used to detect and identify a change in a sensor assembly, such as the sensor assembly 10 described above. For example, a sensor assembly verification value may be based on sensor signal parameters. By way of illustration, a sensor assembly verification value may be an LPO/RPO voltage ratio, DRV/LPO voltage ratio, or DRV/RPO voltage ratio, although any suitable sensor signal parameter ratio may be employed. Additionally, or alternatively, differences between sensor signal parameters may be employed. Accordingly, for example, the current sensor assembly verification values 330 and the baseline sensor assembly verification values 340 may be based on a sensor signal parameter such as a LPO voltage, RPO voltage, and/or a DRV voltage.

As is also explained in the preceding discussion, a sensor assembly verification value shift may be used to detect and identify a change in a sensor assembly. With more particularity, the preceding discussion explains that a change in the sensor signal parameter is correlated with a change in a stiffness of a sensor assembly. Accordingly, a sensor assembly verification value that is based on sensor signal parameters may be used to detect and identify a change in a sensor assembly.

The correlation between a stiffness of the sensor assembly may also be location specific. For example, the DRV/LPO voltage ratio may be correlated with a stiffness of a conduit between a location of a left pick-off sensor and a location of a driver on the conduit. The stiffness of the conduit between the left pick-off location and the driver location may be referred to as an LPO stiffness. Accordingly, under similar or same process conditions, a conduit may experience greater displacement at the location of the left pick-off sensor, which may be referred to as a LPO displacement, as the LPO stiffness decreases over time for a given drive current. This greater LPO displacement may induce a higher LPO voltage value. As a result, the DRV/LPO voltage ratio may decrease as the LPO stiffness decreases. Similar correlations may be present between the DRV/RPO voltage ratio and an RPO stiffness.

As discussed above, an asymmetrical change in the conduit may cause an asymmetrical change in the LPO voltage and the RPO voltage. Similar asymmetrical changes may occur with other sensor signal parameters, such as power, current, etc. The asymmetrical change in the LPO voltage and the RPO voltage can be quantified by using the current LPO/RPO voltage ratio value 332 and the baseline LPO/RPO voltage ratio value 342. For example, the current LPO/RPO voltage ratio value 332 may be compared (e.g., subtracted, divided, etc.) to the baseline LPO/RPO voltage ratio value 342.

A symmetrical change in a conduit of a sensor assembly may be detected by comparing a current sensor assembly verification value to a baseline sensor assembly verification value. For example, the current DRV/LPO voltage ratio value 334 may be compared to a baseline DRV/LPO voltage ratio value 344. Additionally, or alternatively, a 2DRV/(LPO*RPO) voltage ratio may be similarly employed to detect a symmetrical change in the conduit because a symmetrical decrease in stiffness in the conduit may cause greater displacement at both the left pick-off sensor and the right pick-off sensor. However, the foregoing ratios that employ the drive signal or only one of the sensor signals to detect a symmetrical change in the conduit may require that the process conditions be the same as when the baseline ratio values were determined. Additionally, or alternatively, a calculated stiffness value of the conduit may be employed, which may not require that the conditions be the same as when the baseline stiffness value was calculated. These and other current sensor assembly verification values may be used individually to detect a change and may even detect and distinguish between a symmetric and an asymmetric change but may not identify the underlying condition causing the change in the sensor signal parameters.

A shift or change in a sensor assembly verification value may be defined as a comparison between a current sensor assembly verification value and a baseline sensor assembly verification value that indicates a change has occurred in a conduit of a sensor assembly. This sensor assembly verification value shift or change may be characterized as "low" or "decrease", "high" or "increase", or "null" or "static", etc. Additionally, or alternatively, quantitative values may be employed. A combination of two or more sensor assembly verification value shifts or changes may be used to identify the underlying condition of a conduit.

For example, as discussed above, a "low" DRV/LPO voltage ratio shift may indicate that a physical stiffness of the conduits 130, 130' between the driver 180 and the left pick-off sensor 170l has decreased. A "high" DRV/RPO voltage ratio shift may indicate that the physical stiffness of the conduits 130, 130' between the driver 180 and the right pick-off sensor 170l increased. The combination of the "low" DRV/LPO voltage ratio shift and the "high" DRV/RPO voltage ratio shift may be correlated with a particular condition, such as a process that causes corrosion of the conduit proximate an inlet of the conduit and coating of the conduit proximate an outlet of the conduit.

The processing system 302 can further process these values to generate a toggle indicator where only an increase or decrease in the physical stiffness of the conduits 130, 130' between the driver 180 and the left pick-off sensor 170l is indicated. These values and/or toggle indicators can be utilized to determine the underlying change in the conduits 130, 130', as is shown in the following truth table.

| Case | LPO/RPO Voltage Ratio (High Right) | LPO/RPO Voltage Ratio (Low Right) | LPO Stiffness Change (High) | LPO Stiffness Change (Low) | RPO Stiffness Change (High) | RPO Stiffness Change (Low) | Condition of conduits 130, 130' UN = unchanged CT = coating E = erosion C = corrosion D= damage |
|---|---|---|---|---|---|---|---|
| A | 0 | 0 | 0 | 0 | 0 | 0 | UN |
| B | 0 | 1 | 0 | 0 | 0 | 0 | CT or E/C |
| C | 1 | 0 | 0 | 0 | 0 | 0 | CT or E/C |

(continued)

| Case | LPO/RPO Voltage Ratio (High Right) | LPO/RPO Voltage Ratio (Low Right) | LPO Stiffness Change (High) | LPO Stiffness Change (Low) | RPO Stiffness Change (High) | RPO Stiffness Change (Low) | Condition of conduits 130, 130' UN = unchanged CT = coating E = erosion C = corrosion D= damage |
|------|------|------|------|------|------|------|------|
| D | 0 | 0 | 0 | 1 | 0 | 1 | C |
| E | 0 | 0 | 1 | 0 | 1 | 0 | D |
| F | 1 | 0 | 0 | 0 | 1 | 0 | CT or D |
| G | 0 | 1 | 0 | 0 | 0 | 1 | CT or E/C |
| H | 0 | 1 | 1 | 0 | 0 | 0 | CT or D |
| I | 1 | 0 | 0 | 1 | 0 | 0 | CT or E/C |
| J | 0 | 1 | 0 | 1 | 0 | 1 | E/C |
| K | 1 | 0 | 0 | 1 | 0 | 1 | E/C |
| L | 0 | 1 | 1 | 0 | 1 | 0 | D |
| M | 1 | 0 | 1 | 0 | 1 | 0 | D |
| N | 0 | 1 | 1 | 0 | 0 | 1 | CT |
| O | 1 | 0 | 0 | 1 | 1 | 0 | CT |

As can be seen, the combinations of the LPO/RPO voltage ratio, LPO stiffness change, and RPO stiffness change can be used to distinguish between the different possible changes in the conduits 130, 130'. For example, both case J and N have LPO/RPO voltage ratio that are "low right" and RPO stiffness change that are "low". However, case J has a LPO stiffness change of "low" whereas case N has a LPO stiffness change of "high." Case J is indicated as a possible erosion/corrosion of the conduits 130, 130', whereas case N is indicated as a possible coating of the conduits 130, 130'.

Although the above table utilizes the LPO stiffness change, RPO stiffness change, and LPO/RPO voltage ratio to determine the condition of the conduits 130, 130', any suitable means, such as, alternative tables, logic, objects, relationships, circuits, processors, routines, or the like, can be employed to determine the condition in the conduit. For example, only the LPO stiffness change and RPO stiffness change may be utilized to determine the condition of the conduits 130, 130'. However, as can be appreciated, utilizing the LPO/RPO voltage ratio may allow for more specific determinations of the condition of the conduits 130, 130'.

Additionally, or alternatively, the actual values of the LPO stiffness change, RPO stiffness change, and/or LPO/RPO voltage ratio may be employed instead of the toggle indicator to determine the condition of the conduit. For example, the conditions determined by the above table may be supplemented by further steps that determine, for example, that case J is more likely to be corrosion, rather than erosion, if the LPO/RPO voltage ratio is a relatively small "right low." That is, the relatively small "right low" LPO/RPO voltage ratio may be due to the more uniform nature of corrosion compared to erosion, which may be more prevalent at an inlet of a conduit.

Statistical methods that calculate the probability of an outcome can be used to detect a change in the vibratory meter but, due to their complexity, could not be performed by the meter electronics 20. For example, $P$ and $T$ statistics may be employed to test whether a null hypothesis is met for a given set of data. Rejecting the null hypothesis does not determine if a condition exists in the vibratory meter, but that it is false that there is a lack of the condition. In the case of sensor assembly verification, the null hypothesis may be defined as: "the current sensor assembly verification result has the same mean as the baseline sensor assembly verification result." If this null hypothesis is disproven, then it can be assumed that mean of the current sensor assembly verification result is not the same as the baseline sensor assembly verification result due to a change in the vibratory meter.

By way of illustration, in a $t$-test, a $t$-value may be calculated using the following equation:

$$t = \frac{\bar{x} - \mu_0}{s/\sqrt{n}}, \qquad\qquad [6]$$

where:

$\mu_0$ is some specified value;
$\overline{x}$ is a sample mean;
$s$ is a sample standard deviation; and
$n$ is the sample size.

In the context of sensor assembly verification, $\mu_0$ is a baseline sensor assembly verification value, such as a baseline LPO/RPO voltage ratio value. Sensor assembly verification measurements are used to calculate the sample mean $\overline{x}$ and the sample standard deviation $s$ for comparison with a baseline sensor assembly verification value. The number of sensor assembly verification measurements is the sample size $n$. The $t$-test also typically includes a degree-of-freedom, which, for the above equation [6], is defined as $n$ - 1.

As discussed above, the $t$-test can be used to test a null hypothesis, which, for sensor assembly verification, may be defined as whether the sample mean $\overline{x}$ is equal to the reference sensor assembly verification value. To test the null hypothesis, a $P$-value may be calculated using a known distribution of the $t$-value. To test the null hypothesis, the $P$-value is compared to a significance level $\alpha$. The significance level $\alpha$ is typically set to a small value, such as, for example, 0.01, 0.05, or 0.10. If the $P$-value is less than or equal to the significance level $\alpha$, then the null hypothesis is rejected for an alternative hypothesis. Since the null hypothesis is defined as "the current sensor assembly verification result has the same mean as the reference sensor assembly verification results", the alternative hypothesis is that the current sensor assembly verification does not have the same mean and, therefore, a change has occurred in the meter.

However, the $P$-value is difficult to calculate with limited computing resources. For example, the $P$-value may be calculated on a computer workstation with an operating system and a statistical software but may not be easily calculated in an embedded system. The meter electronics 20 described above may be an embedded system with limited computational resources. In addition, the ability to reject the null hypothesis in situ or in real time on the meter electronics could prevent the meter electronics 20 from sending false alarms while also correctly detecting a change in the conduits 130, 130', which is a significant improvement over using predetermined alarm limits.

To this end, a confidence interval that exploits the meter electronics' 20 limited computing resources is used instead of the $P$-value. As a result, the confidence interval can be calculated using the embedded code on the meter electronics 20. For example, the meter electronics 20 can have a current sensor assembly verification value and a standard deviation value of the current sensor assembly verification value stored in two registers. As can be appreciated, the $t$-value described above can be calculated using the current sensor assembly verification value by using a significance level $\alpha$ and a degree-of-freedom. By way of example, the significance level $\alpha$ may be set at 0.01, which is a 99% confidence level. The number of sensor assembly verification tests may be set as 5. Accordingly, a pooled degree-of-freedom is determined to be $2 \cdot (5 - 1) = 8$. A two-tailed student $t$-value can be calculated from the significance level $\alpha$ and the pooled degree-of-freedom using a student $t$-value function as follows:

$$t_{Student,99.8} = tinv\left(1 - \cdot^{01}/_2, 8\right) = 3.36. \qquad [7]$$

A pooled standard deviation of sensor assembly verification values associated with the left and right pick-off sensors 170l, 170r may also be used. In a general case, calculating the pooled standard deviation can be complicated. However, due to the meter electronics 20 storing the standard deviation of the sensor assembly verification value in the registers, the pooled standard deviation can simply be the stored standard deviation. A pooled standard error may also be calculated, which is defined as follows:

$$stderror_{pooled} = \sqrt{\frac{(2 \cdot (stddev_{pooled})^2)}{n_{DOF}}} \qquad [8]$$

$$stderror_{pooled} = \sqrt{2/8} \cdot \sqrt{stddev_{pooled}^2}$$

$$stderror_{pooled} = 0.5 \cdot stddev_{pooled}.$$

A confidence interval range can be calculated using the above determined standard error and the $t$-value as follows:

$$CI_{range} = stderror_{pooled} \cdot t_{student,99.8};$$ [9]

$$CI_{range} = stderror_{pooled} \cdot 3.36.$$

Finally, the confidence interval can be calculated using the mean of the sensor assembly verification measurements and the confidence interval range, which is shown in the following equation:

$$CI = SV_{mean} \pm CI_{range}.$$ [10]

The confidence interval can be used to test the null hypothesis by determining if the confidence interval includes 0.0. If the confidence interval does include 0.0, then the null hypothesis is not rejected, and the sensor assembly verification passes. If the confidence interval does not include 0.0, then the null hypothesis may be rejected, and a sensor assembly verification fault may be sent.

By using a confidence interval instead of a *P*-value where the meter electronics 20 stores a sensor assembly verification value and a standard deviation value of the sensor assembly verification value, the computations are relatively simple and can be performed using embedded code. For example, the meter electronics 20, which may not have sufficient computing resources to calculate the *P*-value, can calculate the confidence interval to perform in-situ or real time statistical analysis. As can also be appreciated, the confidence interval can be used to test the null hypothesis with a desired confidence level.

In addition to the confidence interval, a bias dead band may be defined around zero to account for a bias in the sensor assembly verification value measurements. The bias in the sensor assembly verification value measurements may be due to the mounting, density, temperature gradients, or other conditions of the vibratory meter that can affect the sensor assembly verification measurements. This bias dead band in the *t*-test is a value around zero for which a small bias with a small variation, that would otherwise cause the confidence interval check to reject the hypothesis, does not reject the hypothesis. Accordingly, this bias dead band can be set to a value that reduces the number of false alarms sent by the meter electronics 20.

In the example of a confidence interval that is compared to a zero, the bias dead band is a range around zero where, if the zero is not within the confidence interval but a portion of the bias dead band is within the confidence interval, then the null hypothesis will not be rejected. Mathematically, this test can be expressed as whether the mean value of the sensor assembly verification measurements, which may be referred to as a sensor assembly verification mean, is less than the bias dead band. Or using the above discussed nomenclature: if $\bar{x} < db_{bias}$, where $db_{bias}$ is the bias dead band, then the null hypothesis cannot be rejected.

The bias dead band can be implemented alone or in conjunction with other dead bands. For example, the bias dead band can be implemented in conjunction with a variation dead band. In one example, the variation dead band can be determined from $db_{variation} = db_{bias}/t_{student,99.8}$, where the $db_{variation}$ is the variation dead band. The variation dead band may be compared with a standard deviation of a sensor assembly verification value to determine if the null hypothesis should be rejected. In an example, the bias dead band may be compared as discussed above and the variation dead band can be compared to the standard deviation as follows: if $\bar{x} < db_{bias}$ and if $s < db_{variation}$, then the null hypothesis cannot be rejected. The foregoing test can be utilized after the null hypothesis has been rejected by the confidence interval check. Alternatively, if $\bar{x} < db_{bias}$ and if $s < db_{variation}$, then the sensor assembly verification mean $\bar{x}$ is set to zero and a variation is to be equal to the variation dead band.

A preferred method of testing the null hypothesis may be using two confidence intervals that does not rely on a pooled standard deviation. Using the two confidence intervals may be preferred where it cannot be assumed that a standard deviation of baseline measurements will be the same as a standard deviation of a sensor assembly verification measurements. The first confidence interval (e.g., baseline confidence interval) may consist of a baseline mean and a baseline standard deviation. The second confidence interval (e.g., measured or meter verification confidence interval) may consist of a measured mean and a measured standard deviation of measurements made during a sensor assembly verification.

In this example, the first confidence interval may be an exemplary baseline sensor assembly verification value, although any suitable value, including a probability value, may be a baseline sensor assembly verification value. The second confidence interval may be a probability that is determined from the measured mean and the measured standard deviation. That is, the measured mean may be a central tendency value and the measured standard deviation may be the dispersion value used to verify the sensor assembly, such as the sensor assembly 10 discussed above, by comparing the probability to the baseline sensor assembly verification value, as the following explains.

For two overlapping confidence intervals, no change (e.g., no damage) may be detected if the first and second confidence intervals overlap. Otherwise, a change is detected. Overlap of the two confidence intervals may be determined using any suitable method. For example, the overlap of the two confidence intervals may be determined by comparing a difference between the measured and baseline mean values and a difference between the measured and baseline standard deviation values. The comparison may include terms simply referred to as a calculated left hand side (LHS) value and a calculated right hand side (RHS) value, although any suitable terms may be employed. If the LHS value is less than the RHS value, the overlap is present, and damage may accordingly be detected. Otherwise, no overlap is present and damage may therefore not be detected. The following equations [11] - [13] illustrate this method:

$$LHS = |\mu_{measured} - \mu_{baseline}|; \qquad [11]$$

$$RHS = 2*(\sigma_{measured} + \sigma_{baseline}); \text{ and} \qquad [12]$$

$$LHS < RHS. \qquad [13]$$

where:

$\mu_{measured}$ is a mean value (i.e., an exemplary central tendency value) of the measured values of a sensor assembly verification;

$\mu_{baseline}$ is a mean value (i.e., an exemplary central tendency value) of the baseline values performed for subsequent sensor assembly verifications;

$\sigma_{measured}$ is a standard deviation value (i.e., an exemplary dispersion value) of the measured values of the sensor assembly verification;

$\sigma_{baseline}$ is a standard deviation value (i.e., an exemplary dispersion value) of the baseline values measured for subsequent sensor assembly verifications.

The factor of "2" may be used in the calculation of the RHS value to account for 95% probability in both confidence intervals. Other values may be employed. As can be appreciated, the mean values of the measured values of the sensor assembly verification and the baseline values may be determined by any suitable method. In the following equation [14], the standard deviation of the baseline values is determined by multiplying a dead band value with the mean value of the baseline values:

$$\sigma_{baseline} = dead\ band * \mu_{baseline}. \qquad [14]$$

Accordingly, however calculated, when the confidence interval check is performed, the null hypothesis may not be rejected due to bias in the sensor assembly verification measurements.

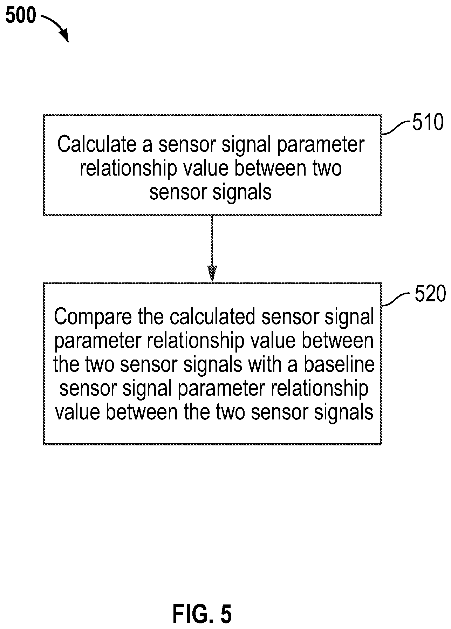

**FIG. 5** shows a method 500 of using parameters of sensor signals of a sensor assembly, such as the sensor assembly 10 described above, to verify the sensor assembly. As shown in FIG. 5, the method 500 calculates a sensor signal parameter relationship value between the two sensor signals in step 510. The sensor signals of step 510 may be the sensor signals 100 described above with reference to FIGS. 1 and 2, although any suitable sensor signals may be employed. In step 520, the method 500 compares the calculated sensor signal parameter relationship value between the two sensor signals with a baseline sensor signal parameter relationship value between the two sensor signals. The comparison may be made by the processing system 302 discussed above, although any suitable processor or processing system may be employed.

In step 510, calculating the sensor signal parameter relationship value between the two sensor signals may comprise calculating the sensor signal parameter relationship value between a left pick-off sensor signal voltage value and a right pick-off sensor signal voltage value. Additionally, calculating the sensor signal parameter relationship value between the two sensor signals may comprise calculating one of a ratio and a difference between two sensor signal parameter values of the two sensor signals. For example, the sensor signal parameter relationship may comprise equation [5] described above, although a difference between the left pick-off sensor signal voltage and a right pick-off sensor signal voltage may be employed. In another alternative example, the sensor signal parameter relationship may be a ratio between the left and right pick-off sensor signal voltage where the right pick-off sensor signal voltage is in the numerator.

Additionally, or alternatively, comparing the calculated sensor signal parameter relationship value with a baseline sensor signal parameter relationship value may comprise calculating a difference between the calculated sensor signal parameter relationship value with the baseline sensor signal parameter relationship value. For example, if the sensor signal parameter relationship is above equation [5], then the comparison may be between the sensor signal parameter relationship of, for example:

$$\Delta\left(\frac{V_{LPO}}{V_{RPO}}\right) = \left(\frac{V_{LPO}}{V_{RPO}}\right)_{CURRENT} - \left(\frac{V_{LPO}}{V_{RPO}}\right)_{BASELINE}. \qquad [15]$$

where:

$\Delta\left(\frac{V_{LPO}}{V_{RPO}}\right)$ is a sensor signal parameter relationship delta or shift;

$\left(\frac{V_{LPO}}{V_{RPO}}\right)_{CURRENT}$ is a current sensor signal parameter relationship; and

$\left(\frac{V_{LPO}}{V_{RPO}}\right)_{BASELINE}$ is a baseline sensor signal parameter relationship.

If the above sensor signal parameter relationship value delta $\Delta\left(\frac{V_{LPO}}{V_{RPO}}\right)$ value is nominal (e.g., at or about zero, within a tolerance about zero, etc.), then the method 400 may logically conclude, indicate, store, or the like, that a change in the conduit or sensor assembly was not detected. If the sensor signal parameter relationship delta $\Delta\left(\frac{V_{LPO}}{V_{RPO}}\right)$ value is not nominal, then the method 500 may conclude, indicate, store, or the like, that a change in the conduit or sensor assembly was detected.

As discussed above, the two sensor signals may comprise two of a drive signal, a left pick-off sensor signal, and a right pick-off sensor signal. For example, in above equation [5] the two sensor signals are left and right pick-off sensor signals, wherein the sensor signal parameters are voltages of the left and right pick-off sensor signals. Alternatively, for example, the two sensor signals may comprise the drive signal and one of the left and right sensor signals. As an illustration, a ratio of a drive signal voltage and a left pick-off sensor signal voltage may be used. As discussed above, however, using the ratio of the drive signal voltage and the left pick-off sensor signal voltage may require that the customer's process be terminated and that conditions used for calculating the sensor signal parameter relationship value may need to be the same as the conditions used to obtain a baseline sensor signal parameter relationship value.

The method 500 may further comprise determining the condition of the sensor assembly based on the comparison of the calculated electrical parameter relationship value and the baseline electrical parameter relationship value between the two or more sensor signals. For example, a sensor signal parameter value delta that is non-zero between the left and right sensor signals may indicate that an asymmetrical change has occurred. This may be due to, for example, non-uniform etching, erosion, or the like. As can be appreciated, if the sensor signal parameter relationship delta is zero or within a tolerance range, then it may be concluded that no change or that a symmetrical change has occurred. Accordingly, the method 500 may proceed further to determine if a symmetrical change has occurred by, for example, ending the customer process and determining if a sensor signal parameter relationship between a drive signal and a left or right pick-off sensor signal has changed relative to a baseline, Additionally or alternatively, the method 500 may further determine conduit parameter based values, such as stiffness, damping, or the like, has changed to further determine the condition of the sensor assembly.

As discussed above, more than one comparison between the sensor assembly verification value may be employed. Additionally, a change of the sensor assembly verification value may also be employed. For example, a combination of sensor assembly verification shifts may be employed to detect and identify a condition of a conduit in a sensor assembly, as the following demonstrates.

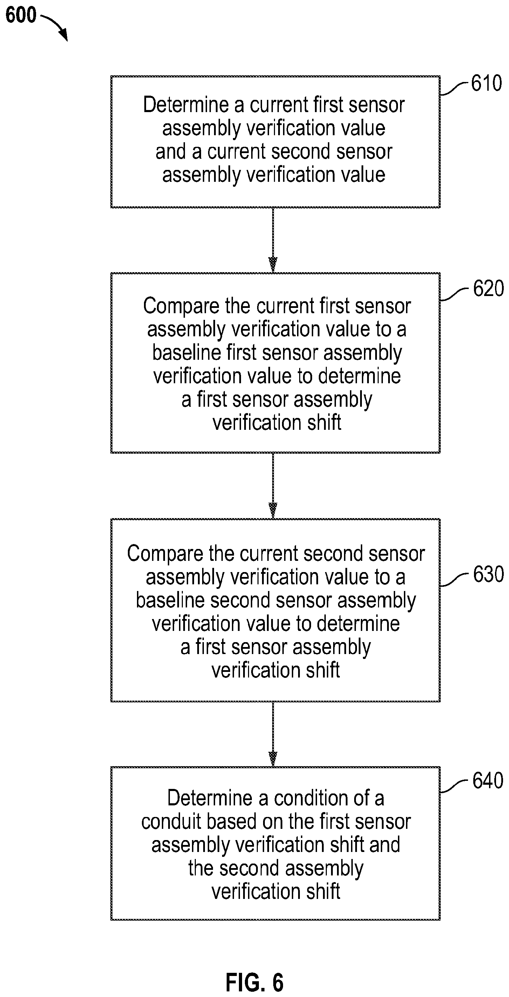

FIG. 6 shows a method 600 of using parameters of sensor signals provided by a sensor assembly to verify the sensor assembly. As shown in FIG. 6, the method 600 determines a current first sensor assembly verification value in step 610. In step 620, the method 600 compares the current first sensor assembly verification value to a baseline first sensor assembly verification value to determine a first sensor assembly verification shift. The method 600, in step 630, also compares the current second sensor assembly verification value to a baseline second sensor assembly verification value to determine a first sensor assembly verification shift. In step 640, the method 600 determines a condition of a conduit based on the first sensor assembly verification shift and the second assembly verification shift. At least one of the current first sensor assembly verification value and the current second sensor assembly verification value is comprised of a sensor signal parameter relationship value. The method 600 may be performed on a meter electronics, such as the meter electronics 20 discussed above. The method 600 may also include additional steps and/or various sub-steps.

For example, the first sensor assembly verification shift may represent a physical stiffness change of the conduit between a driver and the left pick-off and the second sensor assembly verification shift represents a physical stiffness change of the conduit between the driver and the right pick-off. By way of illustration, as discussed above, a physical stiffness change of the conduit between the driver and the left pick-off sensor may be correlated with (e.g., a linear relationship) a DRV/LPO voltage ratio value and a physical stiffness of the conduit between the driver and the right pick-off may be correlated with (e.g., a linear relationship) a DRV/LPO voltage ration value.

The sensor signal parameter relationship value may be one of a ratio and a difference of two sensor signal parameter values. In addition, the sensor signal parameter relationship of the conduit may be determined based on two of a left pick-off sensor signal parameter, a right pick-off sensor signal parameter, and a drive signal parameter. For example, the DRV/LPO voltage ratio value and/or the DRV/LPO voltage ratio value may be employed. However, differences, such as a DRV/LPO voltage difference value and a DRV/RPO voltage difference value may also alternatively or additionally be employed. Ratios may be advantageous because a value of a ratio may not depend on a common factor of the numerator and denominator, whereas the common factor may effectively scale a difference value.

The method 600 may also provide an alarm based on the determination of the condition of the conduit. For example, the meter electronics 20 discussed above, may send a message over the port 26 discussed above. Additionally, or alternatively, the method 600 may display a message on a user interface connected to the meter electronics. As is discussed above, the condition of the conduit comprises at least one of an erosion, a corrosion, a damage, and a coating of the conduit of the vibratory meter.

As can be appreciated from the foregoing discussion, the condition may be detected and identified by using combinations of sensor assembly verification shifts, which are determined based on comparisons between current sensor assembly verification values and a baseline sensor assembly verification value. The comparison may be any suitable comparison, including statistical comparison, as the following discussion illustrates, which may or may not be used in combination with other comparisons, which may or may not employ statistical methods.

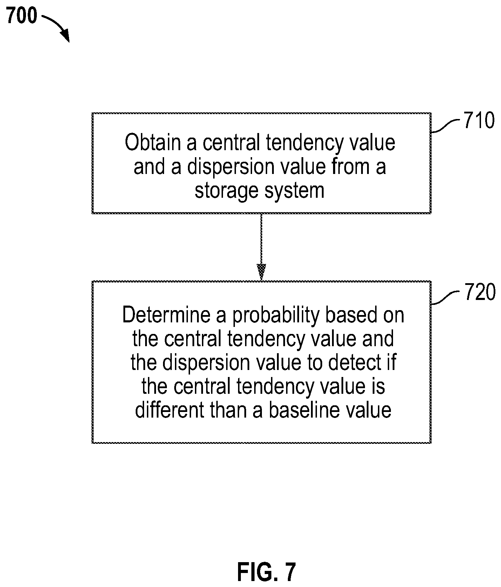

**FIG. 7** shows a method 700 of using parameters of sensor signals provided by a sensor assembly to verify the sensor assembly. As shown in FIG. 7, the method 700 obtains a central tendency value and a dispersion value from a storage system in step 710. The method 700 may be performed on a meter electronics, such as the meter electronics 20. Accordingly, a process system, such as the processing system 302 described above, may obtain the central tendency value from a storage system, such as the storage system 304 described above, may be employed. In step 720, the method 700 determines a probability based on the central tendency value and the dispersion value to detect if the central tendency value is different than a baseline value.

In the method 700, the sensor assembly verification value may be based on sensor signal parameter values. For example, the sensor assembly verification value may be one of an LPO/RPO voltage ratio value, a DRV/LPO voltage ratio value, and a DRV/RPO voltage ratio value discussed above. The sensor signal parameter values may be of sensor signals from a sensor assembly, such as the sensor assembly 10 described above. Accordingly, the sensor assembly verification value may be used to verify the sensor assembly 10 or any suitable sensor assembly.

The method 700 may also determine the probability based on the central tendency value and the dispersion value comprises calculating a t-value and calculating the probability using the t-value. For example, determining the probability based on the central tendency value and the dispersion value may comprise calculating a degree-of-freedom based on a number of sensor assembly verification measurements. Determining the probability based on the meter stiffness may comprise calculating a standard error based on a standard deviation and the degrees-of-freedom, as is described above. For example, the standard error may be calculated using the above equation [8]. The dispersion value may be a pooled standard deviation comprising a standard deviation of sensor assembly verification measurements and baseline sensor assembly verification measurements. The probability may be a confidence interval of the central tendency value, such as a confidence interval calculated using the above equation [10].

As discussed above, more than one probability may be employed. For example, a first probability, such as a first confidence interval, may be based on baseline sensor assembly verification measurements and a second probability, such as a second confidence interval, may be based on measurements made for a sensor assembly verification. By way of illustration, the first confidence interval may be calculated from a mean and a standard deviation of a baseline sensor assembly verification value. For example, the mean of the baseline sensor assembly verification value may be a mean value of baseline sensor assembly verification measurements and the standard deviation of the baseline sensor assembly verification value may be a standard deviation value of baseline sensor assembly verification measurements.

Accordingly, the method 700 may determine the probability based on the central tendency value and the dispersion value by determining a confidence interval based on the central tendency value and the dispersion value. As can be appreciated, the baseline sensor assembly verification value may comprise a central tendency value and a dispersion value of the baseline sensor assembly verification value. The central tendency value of baseline sensor assembly verification value may be a mean of the baseline sensor assembly verification value and the dispersion value of the baseline sensor assembly verification value may be a standard deviation of the baseline sensor assembly verification value.

The method 700 may detect if the central tendency value is different than the baseline sensor assembly verification value by determining if the probability based on the central tendency value and the dispersion value does not overlap with a probability of the baseline sensor assembly verification value. The probability may be based on the central tendency value and the dispersion value comprises a confidence interval determined based on the central tendency value and the dispersion value and the probability of the baseline sensor assembly verification value comprises a confidence interval determined based on baseline sensor assembly verification measurements. The method 700 may determine that the probability of the central tendency value and the dispersion value obtained from storage does overlap with the probability of the baseline sensor assembly verification value if equation [13] is true. The method 700 may determine baseline standard deviation using above equation [14].

The vibratory meter 5, meter electronics 20, and methods 500-700 described above use parameters of sensor signals provided by a sensor assembly to verify the sensor assembly. For example, the method 500 executed on the meter electronics 20 may determine that a current sensor signal parameter relationship $\left(\frac{V_{LPO}}{V_{RPO}}\right)_{CURRENT}$ value is not the same as a baseline sensor signal parameter relationship $\left(\frac{V_{LPO}}{V_{RPO}}\right)_{BASELINE}$ value. The current sensor signal parameter relationship value refers to a value calculated during a sensor assembly verification run and may be referred to as a calculated sensor signal parameter relationship value. As a result, the meter electronics 20 may determine that a change, such as an asymmetrical change, has occurred in the sensor assembly 10. The change may be due to conditions such as corrosion, deposition, erosion, damage, cracks, and/or the like.

The method 500 may also perform additional verifications, such as those based on the drive signal to pick-off sensor signal parameters relationship discussed above, determining a conduit parameter value (e.g., stiffness, residual flexibility, mass, etc.), and/or the like, to further determine the condition causing the change in the sensor assembly. For example, the additional verification of the sensor assembly may determine, even if an asymmetrical change is not detected by using only the parameters of the pick-off sensor signals, then the additional steps may determine whether symmetrical change has occurred. In another example, the additional verification of the sensor assembly may determine which type of asymmetrical change occurred. In this example, the parameters of only the pick-off sensor signals may be used to determine that an asymmetrical change has occurred in the sensor assembly and the additional verification may determine which condition caused the asymmetrical change. By way of illustration, etching may cause only an asymmetrical change whereas erosion may cause both an asymmetrical and symmetrical change.

The methods 500-700 may also perform additional steps based on the verification(s). For example, the method 500 may flag a sensor assembly, such as the sensor assembly 10 described above, as having a condition. Additionally, or alternatively, the method 500 may provide a diagnostic including information on what the condition is likely to be. By way of illustration, the method 500 may cause the meter electronics 20 to send a message over the port 26 to a remote computing resource, such as a customer network, terminal, computer station, or the like, that a condition was detected and that the detected condition was likely corrosion of conduits in the sensor assembly. Additionally, or alternatively, the meter electronics 20 may cause a display part of or communicatively coupled to the meter electronics 20 to display a message, window, text banner, and/or the like indicating that a condition of the sensor assembly was detected and/or information about the condition.

Because the sensor signal parameter values can be determined with relatively few computing resources, the resources of the meter electronics 20 may be more efficiently utilized. In addition, the sensor signal parameter relationship values may be calculated without terminating a customer process. For example, as is explained above, the sensor signal parameter relationship values, in particular the pick-off sensor signal parameter relationship values, were consistent at zero flow rates and maximal flow rates for a given unchanged sensor assembly. In addition, statistical methods that require little computing resources may also be employed. Additionally, when calculating a sensor signal parameter relationship value, such as a pick-off sensor signal parameter relationship value, the conditions (e.g., temperature, pressure, etc.) of the sensor assembly and/or meter electronics may not need to be the same as the conditions of the sensor assembly and/or meter electronics when the baseline sensor signal parameter relationship value is determined.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description.

The scope of the invention is defined by the following claims:

## Claims

1. A method for using parameters of a sensor signal provided by a sensor assembly in a vibratory meter to verify the sensor assembly, the method comprising:

obtaining a central tendency value of a sensor assembly verification value and a dispersion value of the sensor assembly verification value from a storage in a meter electronics of the vibratory meter; and

determining a probability based on the central tendency value and the dispersion value to determine if the central tendency value is different than a baseline sensor assembly verification value;

**characterised in that** the baseline sensor assembly verification value is based on sensor signal parameter values and the sensor assembly verification value is one of a left pick-off / right pick-off (LPO/RPO) voltage ratio value, a drive signal / left pick-off (DRV/LPO) voltage ratio value, and a drive signal / right pick-off (DRV/RPO) voltage ratio value.

2. The method of claim 1, wherein determining the probability based on the central tendency value and the dispersion value comprises calculating a t-value and calculating the probability using the *t*-value.

3. The method of claim 1, wherein determining the probability based on the central tendency value and the dispersion value comprises calculating a degree-of-freedom based on a number of sensor assembly verification measurements.

4. The method of claim 1, wherein determining the probability based on the central tendency value and the dispersion value comprises calculating a standard error based on a standard deviation and the degrees-of-freedom, wherein the standard error is calculated using the following equation:

$$stderror_{pooled} = \sqrt{\frac{(2 \cdot (stddev_{pooled})^2)}{n_{DOF}}};$$

where:

$stddev_{pooled}$ is the standard deviation; and
$n_{DOF}$ is the degrees-of-freedom.

5. The method of one of any of the foregoing claims 1 through 4, wherein the dispersion value is a pooled standard deviation comprising a standard deviation of sensor assembly verification measurements and baseline sensor assembly verification measurements.

6. The method of one of any of foregoing claims 1 through 5, wherein the probability comprises a confidence interval of the central tendency value that is compared to zero, wherein:

if the confidence interval does not include zero, then detect that the central tendency value does not equal the baseline sensor assembly verification value; and
if the confidence interval includes zero, then detect that the central tendency value equals the baseline sensor assembly verification value.

7. The method of claim 1, wherein the central tendency value is the sensor assembly verification value and the confidence interval of the sensor assembly verification value is calculated using the following equation:

$$CI = SV_{mean} \pm CI_{range};$$

where:

$CI$ is the confidence interval of the sensor assembly verification value;
$SV_{mean}$ is the sensor assembly verification value obtained from a storage system; and
$CI_{range}$ is a confidence interval range calculated based on a standard deviation and a t-value.

8. The method of claim 7, wherein the confidence interval range is calculated using the following equation:

$$CI_{range} = stderror_{pooled} \cdot t_{student,99.8};$$

where:

    $stderror_{pooled}$ the pooled standard error of the sensor assembly verification measurements; and
$t_{student,99.8}$ is a *t*-value calculated based on a significance level and a degrees-of-freedom determined from a number of sensor assembly verification measurements comprising the sensor assembly verification value.

9.  The method of one of any of claims 1 through 8, further comprising setting a bias dead band, wherein if the central tendency value is less than the bias dead band, then the sensor assembly verification value is not detected as being different than the baseline sensor assembly verification value.

10.  The method of claim 1, wherein the baseline sensor assembly verification value comprises a central tendency value and a dispersion value of the baseline sensor assembly verification value.

11.  The method of claim 10, wherein the central tendency value of baseline sensor assembly verification value is a mean of the baseline sensor assembly verification value and the dispersion value of the baseline sensor assembly verification value is a standard deviation of the baseline sensor assembly verification value.

12.  The method of claim 1, wherein detecting if the central tendency value is different than the baseline sensor assembly verification value comprises determining if the probability based on the central tendency value and the dispersion value does not overlap with a probability of the baseline sensor assembly verification value.

13.  The method of claim 12, wherein the probability based on the central tendency value and the dispersion value comprises a confidence interval determined based on the central tendency value and the dispersion value and the probability of the baseline sensor assembly verification value comprises a confidence interval determined based on baseline sensor assembly verification measurements.

14.  The method of claim 13, wherein determining if the probability based on the central tendency value and the dispersion value does not overlap with the probability of the baseline sensor assembly verification value comprises calculating the following equations:

$$LHS = |\mu_{measured} - \mu_{baseline}|;$$

$$RHS = 2 * (\sigma_{measured} + \sigma_{baseline});$$

and
determining that the probability of the central tendency value and the dispersion value obtained from the storage overlaps with the probability of the baseline sensor assembly verification value if:

$$LHS < RHS.$$

15.  A meter electronics (20) for using parameters of sensor signals provided by a sensor assembly (10) to verify the sensor assembly (10), the meter electronics (20) comprising:
a processing system (302) including a storage system (304) configured to store a central tendency value of a sensor assembly verification value and dispersion value of the sensor assembly verification value, said processing system (302) being configured to perform the method of one of the foregoing claims 1 through 14.

**Patentansprüche**

1.  Verfahren zur Verwendung von Parametern eines von einer Sensorbaugruppe in einem Vibrationsmessgerät bereitgestellten Sensorsignals zum Verifizieren der Sensorbaugruppe, wobei das Verfahren Folgendes umfasst:

    Erhalten eines zentralen Tendenzwerts eines Sensorbaugruppen-Verifikationswerts und eines Streuungswerts des Sensorbaugruppen-Verifikationswerts aus einem Speicher in einer Messelektronik des Vibrationsmessgeräts; und
Bestimmen einer Wahrscheinlichkeit auf der Basis des zentralen Tendenzwerts und des Streuungswerts, um festzustellen, ob sich der zentrale Tendenzwert von einem Sensorbaugruppen-Verifikationsbasiswert unterscheidet;

**dadurch gekennzeichnet, dass** der Sensorbaugruppen- Verifikationsbasiswert auf Sensorsignalparameterwerten basiert und der Sensorbaugruppen-Verifikationswert einer von einem LPO/RPO-(Left Pick-off/Right Pick-off)- Spannungsverhältniswert, einem DRV/LPO-(Drive Signal/Left Pick-off)-Spannungsverhältniswert und einem DRY/RPO-(Drive Signal/Right Pick-off)-Spannungsverhältniswert ist.

2. Verfahren nach Anspruch 1, wobei das Bestimmen der Wahrscheinlichkeit auf der Basis des zentralen Tendenzwerts und des Streuungswerts das Berechnen eines t-Werts und das Berechnen der Wahrscheinlichkeit anhand des t-Werts umfasst.

3. Verfahren nach Anspruch 1, wobei das Bestimmen der Wahrscheinlichkeit auf der Basis des zentralen Tendenzwerts und des Streuungswerts das Berechnen eines Freiheitsgrads auf der Basis einer Anzahl von Sensorbaugruppen-Verifikationsmessungen umfasst.

4. Verfahren nach Anspruch 1, wobei das Bestimmen der Wahrscheinlichkeit auf der Basis des zentralen Tendenzwerts und des Streuungswerts das Berechnen eines Standardfehlers auf der Basis einer Standardabweichung und der Freiheitsgrade umfasst, wobei der Standardfehler mittels der folgenden Gleichung berechnet wird:

$$stderror_{pooled} = \sqrt{\frac{(2 \cdot stddev_{pooled})^2)}{n_{DOF}}}$$

wobei:

$stddev_{pooled}$ die Standardabweichung ist; und
$n_{DOF}$ die Freiheitsgrade sind.

5. Verfahren nach einem der vorherigen Ansprüche 1 bis 4, wobei der Streuungswert eine gepoolte Standardabweichung ist, die eine Standardabweichung von Sensorbaugruppen-Verifikationsmesswerten und Sensorbaugruppen-Verifikationsbasismesswerten umfasst.

6. Verfahren nach einem der vorherigen Ansprüche 1 bis 5, wobei die Wahrscheinlichkeit ein Konfidenzintervall des zentralen Tendenzwerts umfasst, der mit Null verglichen wird, wobei:

wenn das Konfidenzintervall Null nicht enthält, erkannt wird, dass der zentrale Tendenzwert nicht gleich dem Sensorbaugruppen-Verifikationsbasiswert ist; und
wenn das Konfidenzintervall Null enthält, erkannt wird, dass der zentrale Tendenzwert gleich dem Sensorbaugruppen-Verifikationsbasiswert ist.

7. Verfahren nach Anspruch 1, wobei der zentrale Tendenzwert der Sensorbaugruppen-Verifikationswert ist und das Konfidenzintervall des Sensorbaugruppen-Verifikationswerts mittels der folgenden Gleichung berechnet wird:

$$Cl = SV_{mean} \pm Cl_{range}$$

wobei:

$Cl$ das Konfidenzintervall des Sensorbaugruppen-Verifikationswerts ist;
$SV_{mean}$ der aus einem Speichersystem erhaltene Sensorbaugruppen-Verifikationswert ist; und
$Cl_{range}$ ein auf der Basis einer Standardabweichung und eines t-Werts berechneter Konfidenzintervallbereich ist.

8. Verfahren nach Anspruch 7, wobei der Konfidenzintervallbereich mittels der folgenden Gleichung berechnet wird;

$$Cl_{range} = stderror_{pooled} \cdot t_{student,99.8};$$

wobei:

> $stderror_{pooled}$ der gepoolte Standardfehler der Sensorbaugruppen-Verifikationsmesswerte ist; und
> $t_{student,99.8}$ ein t-Wert ist, der auf der Basis eines Signifikanzniveaus und Freiheitsgraden berechnet wird, die aus einer Anzahl von Sensorbaugruppen-Verifikationsmesswerten bestimmt werden, die den Sensorbaugruppen-Verifikationswert umfassen.

**9.** Verfahren nach einem der Ansprüche 1 bis 8, das ferner das Einstellen einer Bias-Totzone umfasst, wobei, wenn der zentrale Tendenzwert kleiner als die Bias-Totzone ist, der Sensorbaugruppen-Verifikationswert nicht als vom Sensorbaugruppen-Verifikationsbasiswert abweichend erkannt wird.

**10.** Verfahren nach Anspruch 1, wobei der Sensorbaugruppen-Verifikationsbasiswert einen zentralen Tendenzwert und einen Streuungswert des Sensorbaugruppen-Verifikationsbasiswerts umfasst.

**11.** Verfahren nach Anspruch 10, wobei der zentrale Tendenzwert des Sensorbaugruppen-Verifikationsbasiswerts ein Mittelwert des Sensorbaugruppen-Verifikationsbasiswerts ist und der Streuungswert des Sensorbaugruppen-Verifikationsbasiswerts eine Standardabweichung des Sensorbaugruppen-Verifikationsbasiswerts ist.

**12.** Verfahren nach Anspruch 1, wobei das Erkennen, ob der zentrale Tendenzwert sich vom Sensorbaugruppen-Verifikationsbasiswert unterscheidet, das Bestimmen umfasst, ob die auf dem zentralen Tendenzwert und dem Streuungswert basierende Wahrscheinlichkeit nicht mit einer Wahrscheinlichkeit des Sensorbaugruppen-Verifikationsbasiswerts überlappt.

**13.** Verfahren nach Anspruch 12, wobei die auf dem zentralen Tendenzwert und dem Streuungswert basierende Wahrscheinlichkeit ein auf dem zentralen Tendenzwert und dem Streuungswert basierendes Konfidenzintervall umfasst und die Wahrscheinlichkeit des Sensorbaugruppen-Verifikationsbasiswerts ein auf der Basis von Sensorbaugruppen-Verifikationsbasiswerten bestimmtes Konfidenzintervall umfasst.

**14.** Verfahren nach Anspruch 13, wobei das Feststellen, ob die auf dem zentralen Tendenzwert und dem Streuungswert basierende Wahrscheinlichkeit nicht mit der Wahrscheinlichkeit des Sensorbaugruppen-Verifikationsbasiswerts überlappt, das Berechnen der folgenden Gleichungen umfasst:

$$LHS = |\mu_{measured} - \mu_{baseline}|;$$

$$RHS = 2 * (\sigma_{measured} + \sigma_{baseline});$$

und
das Feststellen, dass die aus dem Speicher erhaltene Wahrscheinlichkeit des zentralen Tendenzwerts und des Streuungswerts mit der Wahrscheinlichkeit des Sensorbaugruppen-Verifikationsbasiswerts überlappt, wenn:

$$LHS < RHS.$$

**15.** Messelektronik (20) zur Verwendung von Parametern von Sensorsignalen, die von einer Sensorbaugruppe (10) bereitgestellt werden, um die Sensorbaugruppe (10) zu verifizieren, wobei die Messelektronik (20) Folgendes umfasst:
ein Verarbeitungssystem (302) mit einem Speichersystem (304), das zum Speichern eines zentralen Tendenzwerts eines Sensorbaugruppen-Verifikationswerts und eines Streuungswerts des Sensorbaugruppen-Verifikationswerts konfiguriert ist, wobei das genannte Verarbeitungssystem (302) zum Durchführen des Verfahren nach einem der vorherigen Ansprüche 1 bis 14 konfiguriert ist.

**Revendications**

**1.** Procédé d'utilisation de paramètres d'un signal de capteur fourni par un ensemble capteur dans un débitmètre vibratoire pour vérifier l'ensemble capteur, le procédé consistant à :

obtenir une valeur de tendance centrale d'une valeur de vérification d'ensemble capteur et une valeur de dispersion de la valeur de vérification d'ensemble capteur auprès d'un stockage dans une électronique de comptage du débitmètre vibratoire ; et

déterminer une probabilité sur la base de la valeur de tendance centrale et de la valeur de dispersion pour déterminer si la valeur de tendance centrale est différente d'une valeur de vérification d'ensemble capteur de référence ;

le procédé étant **caractérisé en ce que** la valeur de vérification d'ensemble capteur de référence est basée sur des valeurs de paramètre de signal de capteur et la valeur de vérification d'ensemble capteur est une valeur parmi une valeur de rapport de tension entre un capteur de mesure gauche et un capteur de mesure droit (LPO/RPO), une valeur de rapport de tension entre un signal d'excitation et le capteur de mesure gauche (DRV/LPO) et une valeur de rapport de tension entre le signal d'excitation et le capteur de mesure droit (DRV/RPO).

2. Procédé selon la revendication 1, la détermination de la probabilité sur la base de la valeur de tendance centrale et de la valeur de dispersion consistant à calculer une valeur t et à calculer la probabilité au moyen de la valeur t.

3. Procédé selon la revendication 1, la détermination de la probabilité sur la base de la valeur de tendance centrale et de la valeur de dispersion consistant à calculer un degré de liberté sur la base d'un nombre de mesures de vérification d'ensemble capteur.

4. Procédé selon la revendication 1, la détermination de la probabilité sur la base de la valeur de tendance centrale et de la valeur de dispersion consistant à calculer une erreur-type sur la base d'un écart-type et des degrés de liberté, l'erreur-type étant calculée au moyen de l'équation suivante :

$$stderror_{pooled} = \sqrt{\frac{(2 \cdot stddev_{pooled})^2)}{n_{DOF}}}$$

où :

$stddev_{pooled}$ est l'écart-type ; et
$n_{DOF}$ est le degré de liberté.

5. Procédé selon l'une quelconque des revendications précédentes 1 à 4, la valeur de dispersion étant un écart-type combiné comprenant un écart-type de mesures de vérification d'ensemble capteur et de mesures de vérification d'ensemble capteur de référence.

6. Procédé selon l'une quelconque des revendications précédentes 1 à 5, la probabilité comprenant un intervalle de confiance de la valeur de tendance centrale qui est comparé à zéro, où :

si l'intervalle de confiance n'inclut pas zéro, alors détecter que la valeur de tendance centrale n'est pas égale à la valeur de vérification d'ensemble capteur de référence ; et

si l'intervalle de confiance inclut zéro, alors détecter que la valeur de tendance centrale est égale à la valeur de vérification d'ensemble capteur de référence.

7. Procédé selon la revendication 1, la valeur de tendance centrale étant la valeur de vérification d'ensemble capteur et l'intervalle de confiance de la valeur de vérification d'ensemble capteur étant calculé au moyen de l'équation suivante :

$$Cl = SV_{mean} \pm Cl_{range}$$

où :

$Cl$ est l'intervalle de confiance de la valeur de vérification d'ensemble capteur ;
$SV_{mean}$ est la valeur de vérification d'ensemble capteur obtenue auprès d'un système de stockage ; et
$Cl_{range}$ est une plage d'intervalle de confiance calculée sur la base d'un écart-type et d'une valeur t.

8. Procédé selon la revendication 7, la plage d'intervalle de confiance étant calculée au moyen de l'équation suivante :

$$Cl_{range} = stderror_{pooled} \cdot t_{student,99.8} \quad ;$$

où :

$stderror_{pooled}$ est l'erreur-type combinée des mesures de vérification d'ensemble capteur ; et
$t_{student,99.8}$ est une valeur t calculée sur la base d'un niveau d'importance et d'un degré de liberté déterminés à partir d'un nombre de mesures de vérification d'ensemble capteur comprenant la valeur de vérification d'ensemble capteur.

9. Procédé selon l'une quelconque des revendications 1 à 8, consistant en outre à définir une zone morte biaise et, si la valeur de tendance centrale est inférieure à la zone morte biaise, alors la valeur de vérification d'ensemble capteur n'étant pas détectée comme étant différente de la valeur de vérification d'ensemble capteur de référence.

10. Procédé selon la revendication 1, la valeur de vérification d'ensemble capteur de référence comprenant une valeur de tendance centrale et une valeur de dispersion de la valeur de vérification d'ensemble capteur de référence.

11. Procédé selon la revendication 10, la valeur de tendance centrale de la valeur de vérification d'ensemble capteur de référence étant une moyenne de la valeur de vérification d'ensemble capteur de référence et la valeur de dispersion de la valeur de vérification d'ensemble capteur de référence étant un écart-type de la valeur de vérification d'ensemble capteur de référence.

12. Procédé selon la revendication 1, le fait de détecter si la valeur de tendance centrale est différente de la valeur de vérification d'ensemble capteur de référence consistant à déterminer si la probabilité basée sur la valeur de tendance centrale et la valeur de dispersion ne chevauche pas une probabilité de la valeur de vérification d'ensemble capteur de référence.

13. Procédé selon la revendication 12, la probabilité basée sur la valeur de tendance centrale et la valeur de dispersion comprenant un intervalle de confiance déterminé sur la base de la valeur de tendance centrale et de la valeur de dispersion, et la probabilité de la valeur de vérification d'ensemble capteur de référence comprenant un intervalle de confiance déterminé sur la base de mesures de vérification d'ensemble capteur de référence.

14. Procédé selon la revendication 13, le fait de déterminer si la probabilité basée sur la valeur de tendance centrale et la valeur de dispersion ne chevauche pas la probabilité de la valeur de vérification d'ensemble capteur de référence consistant à calculer les équations suivantes :

$$LHS = |\mu_{measured} - \mu_{baseline}| \quad ;$$

$$RHS = 2 * (\sigma_{measured} + \sigma_{baseline}) \quad ;$$

et
déterminer que la probabilité de la valeur de tendance centrale et de la valeur de dispersion obtenues auprès du stockage chevauche la probabilité de la valeur de vérification d'ensemble capteur de référence si :

$$LHS < RHS.$$

15. Électronique de comptage (20) permettant d'utiliser des paramètres de signaux de capteur fournis par un ensemble capteur (10) pour vérifier l'ensemble capteur (10), l'électronique de comptage (20) comprenant :
un système de traitement (302) comprenant un système de stockage (304) configuré pour stocker une valeur de tendance centrale d'une valeur de vérification d'ensemble capteur et une valeur de dispersion de la valeur de vérification d'ensemble capteur, ledit système de traitement (302) étant configuré pour réaliser le procédé selon l'une des revendications précédentes 1 à 14.

**FIG. 1**

EP 4 445 102 B1

**FIG. 2**

EP 4 445 102 B1

METER ELECTRONICS 20

PROCESSING SYSTEM 302

STORAGE SYSTEM 304

OPERATIONAL ROUTINE 310

MASS FLOW RATE VALUE 312

DENSITY VALUE 314

SENSOR SIGNAL PARAMETERS 320

DRIVE VOLTAGE VALUE 322

LPO VOLTAGE VALUE 324

RPO VOLTAGE VALUE 326

CURR. SENS. ASSM. VERIF. 330

CURR. LPO/RPO V. RATIO VALUE 332

CURR. DRV/LPO V. RATIO VALUE 334

CURR. DRV/RPO V. RATIO VALUE 336

B.L. SENS. ASSM. VERIF. 340

B.L. LPO/RPO V. RATIO VALUE 342

B.L. DRV/LPO V. RATIO VALUE 344

B.L. DRV/RPO V. RATIO VALUE 346

INTERFACE 301

**FIG. 3**

FIG. 4

EP 4 445 102 B1

500

Calculate a sensor signal parameter relationship value between two sensor signals — 510

Compare the calculated sensor signal parameter relationship value between the two sensor signals with a baseline sensor signal parameter relationship value between the two sensor signals — 520

FIG. 5

600

Determine a current first sensor
assembly verification value
and a current second sensor
assembly verification value — 610

Compare the current first sensor
assembly verification value to a
baseline first sensor assembly
verification value to determine
a first sensor assembly
verification shift — 620

Compare the current second sensor
assembly verification value to a
baseline second sensor assembly
verification value to determine
a first sensor assembly
verification shift — 630

Determine a condition of a
conduit based on the first sensor
assembly verification shift and
the second assembly
verification shift — 640

**FIG. 6**

700

710

Obtain a central tendency value
and a dispersion value from a
storage system

720

Determine a probability based on
the central tendency value and
the dispersion value to detect if
the central tendency value is
different than a baseline value

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2019045703 A1